# EUROPEAN PATENT SPECIFICATION

(11) **EP 3 974 179 B1**
(45) Date of publication and mention of the grant of the patent: **07.05.2025**
(21) Application number: 20809288.2
(22) Date of filing: 18.05.2020
(51) Int. Cl.: B32B 9/00, B32B 17/06, B32B 27/00, B32B 27/30, C03C 17/42, C09K 3/18

(54) **STAIN-PROOF BASE MATERIAL**
SCHMUTZABWEISENDES BASISMATERIAL
MATÉRIAU DE BASE RÉSISTANT AUX TACHES

(30) Priority: 22.05.2019 JP 2019096329; 02.09.2019 JP 2019159523
(43) Date of publication of application: 30.03.2022
(73) Proprietor: DAIKIN INDUSTRIES, LTD., Osaka-Shi, Osaka 530-0001 (JP)
(72) Inventor: NOMURA, Takashi, Osaka-shi, Osaka 530-8323 (JP); NAITOU, Masato, Osaka-shi, Osaka 530-8323 (JP); OZAWA, Kaori, Osaka-shi, Osaka 530-8323 (JP); NAKANO, Nozomi, Osaka-shi, Osaka 530-8323 (JP); MITSUHASHI, Hisashi, Osaka-shi, Osaka 530-8323 (JP); WATANABE, Yuusuke, Osaka-shi, Osaka 530-8323 (JP)
(74) Representative: Hoffmann Eitle
(86) International application number: PCT/JP2020/019653
(87) International publication number: WO 2020/235528

(56) References cited:
- EP-A1- 3 498 756
- WO-A1-2005/105326
- WO-A1-2015/095123
- WO-A1-2017/078141
- WO-A1-2018/056413
- JP-A- H10 194 784
- US-A1- 2006 147 723

## Description

### Technical Field

The present disclosure relates to an article comprising a fluoropolyether group-containing silane compound.

### Background Art

Certain types of fluorine-containing silane compounds are known to be capable of providing excellent water-repellency, oil-repellency, antifouling properties, and the like when used in surface treatment of a substrate. A layer obtained from a surface-treating agent containing a fluorine-containing silane compound (hereinafter, also referred to as a "surface-treating layer") is applied as a so-called functional thin film to a large variety of substrates such as glass, plastics, fibers, sanitary articles, and building materials (JP-A-2014-218639 and JP-A-2017-082194).

WO 2015/095123 discloses a composite article comprising a substrate and, on at least one face thereof, a multilayered coating comprising in this order (i) an abrasion-resistant layer having an index of refraction of > 1.55 and comprising inorganic oxide nanoparticles and a polymer binder; and (ii) an antireflection layer having an index of refraction of < 1.48 and comprising a fluorosilane polymer containing a perfluoropolyether group.

WO 2005/105326 relates to a method of depositing an anti-soiling composition on an antireflective substrate, wherein the anti-soiling composition is a specified fluorosilane polymer containing a perfluoropolyether group.

US-A_2006/147723 describes a low refractive index composition for antireflection coatings of an optical display component, which composition comprises the reaction product of (i) a reactive fluoropolymer, (ii) at least one amino organosilane ester coupling agent and (iii) a crosslinker which may be, among others, a perfluoropolyether multi-acrylate crosslinker.

EP-A-3 498 756 (WO 2018/056413) relates to a compound suitable as antifouling agent, the compound being an isocyanuric acid derivative having a substituent which is a monovalent organic group containing a (per)fluoropolyether chain.

EP-A-3 372 399 (WO 2017/078141) discloses an article comprising, in this order, (i) a zirconium oxide base material, (ii) an intermediate layer comprising one or more metal oxides and (iii) a layer formed from a surface treating agent comprising a fluorine-containing silane compound which preferably is a specified perfluoropolyether chain-containing compound.

EP-A-0 842 908 (JP-A-1998-194784) addresses a water repellant alkali glass plate having a first coating layer comprising a silicon oxide hydroxide and a second coating layer comprising an organic fluoroalkyl- and silicon-containing compound.

### Summary of Invention

### Technical Problem

The fluorine-containing silane compound described in JP-A-2014-218639 or JP-A-2017-082194can provide a surface-treating layer having an excellent function, but a surface-treating layer having higher friction durability and chemical resistance is required.

An object of the present disclosure is to provide an article having a surface-treating layer having higher friction durability and chemical resistance.

### Solution to Problem

The present provides an article (also referred to as "the present article" hereinafter) comprising:
- a substrate;
- an intermediate layer located on the substrate and comprising a composite oxide which (i) is a composite oxide of Si and Ta or of Si and Nb, and (ii) constitutes a homogeneous phase; and
- a surface-treating layer located directly on the intermediate layer and formed from a surface-treating agent containing at least one fluorine-containing silane compound of formula (1) or (2):

   R^{F1}_{α}-X^{A}-R^{Si}_{β} (1)

   R^{Si}_{γ}-X^{A}-R^{F2}-X^{A}-R^{Si}_{γ} (2)
wherein, each independently at each occurrence,
- R^{F1}: is Rf¹-R^{F}-O_{q}-, wherein Rf¹ is C₁₋₁₆-alkyl optionally substituted with F, R^{F} is a divalent fluoropolyether group, and q is 0 or 1;
- R^{F2}: is -Rf²ₚ-R^{F}-O_{q}-, wherein R^{F} and q are as defined above, Rf² each independently is C₁₋₆-alkylene optionally substituted with F, and p is 0 or 1;
- R^{Si}: is a monovalent group containing a Si atom to which H, OH, a hydrolyzable group, or a monovalent organic group is bonded; and at least one R^{Si} containing a Si atom to which OH or a hydrolyzable group is bonded;
- X^{A}: is a single bond or a di- to decavalent organic group;
- α: is an integer of 1-9;
- β: is an integer of 1-9; and
- γ: each independently is an integer of 1-9.

Also, the present invention provides a method (also referred to as "the present method" hereinafter) for producing an article comprising a substrate and, formed thereon, a surface-treating layer formed from a surface-treating agent containing at least one fluorine-containing silane compound of formula (1) or (2) as defined above, comprising:
- simultaneously depositing Si and Ta or Si and Nb on the substrate to form an intermediate layer containing a composite oxide of Si and Ta or of Si and Nb; and
- forming a surface-treating layer directly on the intermediate layer.

Yet further, the present invention provides the use (also referred to as ,"the present use" hereinafter) of a surface-treating agent containing at least one fluorine-containing silane compound of formula (1) or (2) as defined above for producing the above defined article.

Preferred embodiments of the invention are as defined in the appended dependent claims and/or in the following detailed description.

### Advantageous Effect of Invention

According to the present invention, it is possible to provide an article having a surface-treating layer having better friction durability and chemical resistance.

### Description of Embodiments

The present article comprises
- a substrate;
- an intermediate layer located on the substrate and comprising a composite oxide which (i) is a composite oxide of Si and Ta or of Si and Nb, and (ii) constitutes a homogeneous phase; and
- a surface-treating layer located directly on the intermediate layer and formed from a surface-treating agent containing at least one fluorine-containing silane compound of formula (1) or (2) as specified herein.

The substrate usable in the present invention may be composed of any suitable material, for example, glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more may be used in combination (e.g., as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO) or indium zinc oxide is used. The substrate, according to its specific configuration, may have, for example, an insulating layer, an adhesive layer, a protecting layer, a decorated frame layer (I-CON), an atomizing film layer, a hard coating layer, a polarizing film, a phase difference film, or a liquid crystal display module.

The shape of the substrate is not limited, and may be, for example, in the form of a plate or a film. The surface region of the substrate on which a surface-treating layer is to be formed is at least a part of the substrate surface, and may be suitably determined according to the application and specific specifications of an article to be produced.

In one embodiment, the substrate, or at least the surface portion thereof, may be composed of a material originally having a hydroxyl group. Examples of the material include glass as well as metal (in particular, base metal) wherein a natural oxidized film or a thermal oxidized film is formed on the surface, ceramics, and semiconductors. Alternatively, when the substrate has an insufficient amount of a hydroxyl group or when the substrate originally does not have a hydroxyl group as in resin, a pre-treatment may be performed on the substrate to thereby introduce or increase a hydroxyl group on the surface of the substrate. Examples of such a pre-treatment include a plasma treatment (e.g., corona discharge) and ion beam irradiation. The plasma treatment can be suitably utilized to not only introduce or increase a hydroxyl group on the substrate surface, but also clean the substrate surface (e.g. remove foreign matter). Another example of the pre-treatment includes a method wherein a monolayer of a surface adsorbent having a carbon-carbon unsaturated bonding group is formed on the substrate surface by a LB method (a Langmuir-Blodgett method), or a chemical adsorption method beforehand, and thereafter cleaving the unsaturated bond under an atmosphere containing e.g. oxygen or nitrogen.

In another embodiment, the substrate may be that of which at least the surface consists of a material comprising other reactive group such as a silicone compound having one or more Si-H group or alkoxysilane.

In a preferable embodiment, the substrate is glass. The glass is preferably sapphire glass, soda-lime glass, alkali aluminosilicate glass, borosilicate glass, alkali-free glass, crystal glass, or quartz glass, particularly preferably chemically strengthened soda-lime glass, chemically strengthened alkali aluminosilicate glass, and chemically bonded borosilicate glass.

The intermediate layer is located on the substrate.

The intermediate layer may be formed so as to be in contact with the substrate, or may be formed on the substrate via another layer. In a preferable embodiment, the intermediate layer is formed so as to be in contact with the substrate.

The intermediate layer contains a composite oxide of Si and another metal, the other metal being Ta or Nb.

Here, the composite oxide includes not only a material in which oxides of a plurality of elements including Si constitute a homogeneous phase, a so-called solid solution, but also a material in which oxides of a plurality of elements constitute a heterogeneous phase, and a material in which oxides of a plurality of elements are mixed. For example, the composite oxide may include those having different oxidation states, such as SiOₓ (x = 1 to 2) and M_{y}O_{z} (y = 1-2, z = 1-5). Further, the concentration of other metals may vary along the thickness direction of the intermediate layer, for example, may have a concentration gradient along the thickness direction of the intermediate layer, or may vary stepwise. Preferably, the composite oxide is constituted of a solid solution constituting a homogeneous phase.

In a further preferable embodiment, the other metal is Ta.

In one embodiment, the molar ratio of Si to the other metal is (10:90)-(99.9:0.1) (Si:other metal), preferably (10:90)-(99:1), more preferably (10:90)-(95:5), still more preferably (13:87)-(93:7), particularly preferably (40:60)-(80:20), and for example, may be (50:50)-(99:1), (50:50)-(90:10), or (75:25)-(99:1). When the molar ratio of Si to the other metal is in such a range, the durability of the surface-treating layer is improved. When the molar ratio of Si to the other metal varies depending on the depth, the molar ratio of Si to the other metal in the intermediate layer may be an average value thereof.

In one embodiment, the compositional features of the intermediate layer at the region of 0.1-10 nm, preferably 0.1-5 nm, more preferably 0.1-3 nm, and further preferably 0.1-2 nm from the outermost surface close to the surface-treating layer satisfy the molar ratio mentioned above. By setting the compositional features of the intermediate layer within the range of the molar ratio, the friction durability and the chemical resistance can be more reliably improved.

In the above embodiment, the compositional features from the outermost surface to a predetermined depth may be an average value of the concentrations from the outermost surface to a predetermined depth. For example, the average value of the compositional features from the outermost surface to 2 nm, 3 nm or 5 nm may be the average value of the compositional features measured every predetermined time and sputtered at a constant rate for a predetermined time. For example, the compositional features of the intermediate layer may be an average value of concentrations at the depths of 0.1 nm, 1 nm, 2 nm, 3 nm, 5 nm, 6 nm, 9 nm and 10 nm from the outermost surface. For example, the compositional features of the intermediate layer at the region of 0.1-10 nm from the outermost surface may be an average value of concentrations at the depths of 0.1 nm, 1 nm, 2 nm, 3 nm, 5 nm, 6 nm, 9 nm and 10 nm from the outermost surface, and the compositional features of the intermediate layer at the region of 0.1-5 nm from the outermost surface may be an average value of concentrations at the depths of 0.1 nm, 1 nm, 2 nm, 3 nm and 5 nm from the outermost surface.

The thickness of the intermediate layer is not limited, but may be, for example, 1.0-100 nm, preferably 2-50 nm, and more preferably 2-20 nm. By setting the thickness of the intermediate layer to be 1.0 nm or more, the effect of improving the friction durability and chemical resistance of the surface-treating layer can be more reliably obtained. Further, by setting the thickness of the intermediate layer to be 100 nm or less, the transparency of the article can be further increased.

The method for forming the intermediate layer is not limited, but a method capable of simultaneously depositing Si and another metal is preferable, and for example, sputtering, ion beam assist, vacuum deposition (preferably an electron beam heating method), CVD (chemical vapor deposition), or atomic layer deposition can be used, and sputtering is preferably used.

A DC (direct current) sputtering method, an AC (alternating current) sputtering method, an RF (high frequency) sputtering method, or an RAS (radical assist) sputtering method can be used as the sputtering method. These sputtering methods may be either a two pole sputtering method or a magnetron sputtering method.

As a silicon target in sputtering, a target containing silicon (Si) or silicon oxide as a main component is used. It is desirable that a target containing silicon (Si) as a main component has a certain degree of conductivity so as to enable DC sputtering. Therefore, as the target containing silicon (Si) as a main component, it is preferable to use a target made of polycrystalline silicon or a target obtained by doping single crystal silicon with a known dopant such as phosphorus (P) or boron (B) within a range that does not impair the characteristics of the present invention. Such a target made of polycrystalline silicon and a target obtained by doping single crystal silicon with e.g. phosphorus (P) or boron (B) can be used in any of DC sputtering, AC sputtering, RF sputtering, and RAS sputtering.

When a film is formed by a sputtering method, a glass substrate is placed in a chamber containing a mixed gas atmosphere of an inert gas and an oxygen gas, and a target is selected as an adhesion layer forming material so as to have a desired compositional features to form a film. At this time, the kind of the inert gas in the chamber is not particularly limited, and various inert gases such as argon and helium can be used.

Although the pressure in the chamber by the mixed gas of the inert gas and the oxygen gas is not limited, it is easy to set the surface roughness of the film to a preferable range by setting the pressure in the chamber to 0.5 Pa or less. This is considered to be due to the following reasons. That is, when the pressure in the chamber by the mixed gas of the inert gas and the oxygen gas is 0.5 Pa or less, the average free path of the film formation molecules is secured, and the film formation molecules reach the substrate with more energy. Therefore, it is considered that the rearrangement of the film formation molecules is promoted and a film having a relatively dense and smooth surface is formed. The lower limit value of the pressure in the chamber by the mixed gas of the inert gas and the oxygen gas is not limited, but is preferably 0.1 Pa or more, for example.

When the high refractive index layer and the low refractive index layer are formed by the sputtering method, the layer thickness and compositional features of each layer can be adjusted by, for example, adjusting the discharge power, adjusting the film formation time, adjusting the ratio of the mixed gas of the inert gas and the oxygen gas, or the like.

By providing the intermediate layer, the durability of the surface-treating layer can be improved. The term "durability" refers to alkali resistance, hydrolysis resistance, and abrasion resistance.

From the viewpoint of both alkali resistance and abrasion resistance, the molar ratio of Si to the other metal is (10:90)-(99.9:0.1) (Si:other metal), preferably (10:90)-(99:1), more preferably (10:90)-(95:5), still more preferably (13:87)-(93:7), particularly preferably (40:60)-(80:20), and for example, may be (50:50)-(99:1), (50:50)-(90:10), or (75:25)-(99:1). When the molar ratio of Si to the other metal is in such a range, the alkali resistance and the friction durability of the surface-treating layer is improved.

The compositional features and ratio of the intermediate layer can be determined by the following surface analysis. X-ray photoelectron spectroscopy or time-of-flight secondary ion mass spectrometry can be used as the surface analysis method.

As an apparatus for performing X-ray photoelectron spectroscopy for measuring the compositional features and ratio of the intermediate layer, XPS, PHI 5000 VersaProbe II manufactured by ULVAC-PHI, Inc. can be used. The measurement conditions of the XPS can be as follows: the X-ray source is 25 W monochromatic AlKα radiation; the photoelectron detection surface is 1400 µm × 300 µm; the photoelectron detection angle is in the range of 20-90° (for example, 20°, 45°, 90°); the pass energy is 23.5 eV; and Ar ions are used as sputtering ions. The compositional features of the laminate can be determined by observing the peak areas of C1s, O1s, F1s, and Si2p orbitals, and the appropriate orbital of other metals under the above-described apparatus and measurement conditions and calculating the atomic ratio of carbon, oxygen, fluorine, silicon, and other metals. Examples of suitable orbits of the other metals include 1s orbits for atomic number 5 (B), 2p orbits for atomic numbers 13, 14 and 21-31 (Al to Si and Sc to Ga), 3d orbits for atomic numbers 32, 33 and 39-52 (Ge to As and Y to Te), and 4f orbits for atomic numbers 72-83 (Hf to Bi).

It is also possible to analyze the intermediate layer in the depth direction. The measurement conditions of the XPS can be as follows: the X-ray source is 25 W monochromatic AlKα radiation; the photoelectron detection surface is 1400 µm × 300 µm; the photoelectron detection angle is in the range of 20-90° (for example, 20°, 45°, 90°); the pass energy is 23.5 eV; and Ar ions are used as sputtering ions. The surface layer of the laminate is etched by sputtering with Ar ions to a thickness of 1-100 nm in terms of SiO₂, and the peak areas of O1s and Si2p orbitals, and appropriate orbitals of other metals are observed at the respective etched depths, and the atomic ratios of oxygen, silicon, and other metals are calculated, whereby the compositional features of the interior of the laminate can be determined. Examples of suitable orbits of the other metals include 1s orbits for atomic number 5 (B), 2p orbits for atomic numbers 13, 14 and 21-31 (Al to Si and Sc to Ga), 3d orbits for atomic numbers 32, 33 and 39-52 (Ge to As and Y to Te), and 4f orbits for atomic numbers 72-83 (Hf to Bi).

By adjusting the photoelectron detection angle of the XPS analysis, the detection depth can be appropriately adjusted. For example, a shallow angle close to 20° allows a detection depth of about 3 nm, while a deep angle close to 90° allows a detection depth of about 10 nm.

In the composition analysis by XPS analysis, when e.g. Si of the substrate is detected, the compositional features of the intermediate layer can be calculated by calculating the amount of Si of the detected substrate from the detected amount of a specific atom in the substrate, for example, a metal atom (for example, Al, Na, K, B, Ca, Mg, or Sn) contained in a trace amount when the substrate is glass, and subtracting the calculated amount from the measurement result.

The surface-treating layer is located directly on the intermediate layer. That is, the surface-treating layer is formed so as to be in contact with the intermediate layer.

The surface-treating layer can be formed from a surface-treating agent containing a fluorine-containing silane compound.

The fluorine-containing silane compound is at least one fluoropolyether group-containing compound of formula (1) or (2):

R^{F1}_{α}-X^{A}-R^{Si}_{β} (1)

R^{SL}_{γ}-X^{A}-R^{F2}-X^{A}-R^{Si}_{γ} (2)

wherein, each independently at each occurrence,
- R^{F1}: is Rf¹-R^{F}-O_{q}-, wherein Rf¹ is C₁₋₁₆-alkyl optionally substituted with F, R^{F} is a divalent fluoropolyether group, and q is 0 or 1;
- R^{F2}: is -Rf²ₚ-R^{F}-O_{q}-, wherein R^{F} and q are as defined above, Rf² each independently is C₁₋₆-alkylene optionally substituted with F, and p is 0 or 1;
- R^{Si}: is a monovalent group containing a Si atom to which H, OH, a hydrolyzable group, or a monovalent organic group is bonded; and at least one R^{Si} containing a Si atom to which OH or a hydrolyzable group is bonded;
- X^{A}: is a single bond or a di- to decavalent organic group;
- α: is an integer of 1-9;
- β: is an integer of 1-9; and
- γ: each independently is an integer of 1-9.

The term "monovalent organic group", as used herein, represents a monovalent group containing carbon. The monovalent organic group is not limited, and may be a hydrocarbon group or a derivative thereof. The derivative of a hydrocarbon group represents a group having one or more of e.g. N, O, S, Si, amide, sulfonyl, siloxane, carbonyl, and carbonyloxy at the terminal of the hydrocarbon group or in the molecular chain thereof.

As used herein, the "divalent organic group" is not limited, and examples thereof include a divalent group where one hydrogen atom is further removed from a hydrocarbon group.

The "hydrocarbon group", as used herein, represents a group which contains carbon and hydrogen and which is obtained by removing one hydrogen atom from a molecule. The hydrocarbon group is not limited, and examples thereof include a C₁₋₂₀-hydrocarbon group, optionally substituted with one or more substituents, such as an aliphatic hydrocarbon group and an aromatic hydrocarbon group. The "aliphatic hydrocarbon group" may be either straight, branched, or cyclic, and may be either saturated or unsaturated. The hydrocarbon group may contain one or more ring structures. The hydrocarbon group may have one or more of e.g. N, O, S, Si, amide, sulfonyl, siloxane, carbonyl, and carbonyloxy at the terminal or in the molecular chain thereof.

The substituent of the "hydrocarbon group", as used herein, is not limited, and examples thereof include one or more groups selected from halogen, and C₁₋₆-alkyl, C₂₋₆-alkenyl, C₂₋₆-alkynyl, C₃₋₁₀-cycloalkyl, unsaturated C₃₋₁₀-cycloalkyl, a5- to 10-membered heterocyclyl, 5- to 10-membered unsaturated heterocyclyl, C₆₋₁₀-aryl, and 5- to 10-membered heteroaryl each optionally substituted with one or more halogen atoms.

The alkyl group and the phenyl group may be herein unsubstituted or substituted, unless particularly noted. Each substituent of such groups is not limited, and examples thereof include one or more groups selected from halogen, C₁₋₆-alkyl, C₂₋₆-alkenyl and C₂₋₆-alkynyl.

The term "hydrolyzable group", as used herein, represents a group which is able to undergo a hydrolysis reaction, i.e., represents a group that can be removed from the main backbone of a compound by a hydrolysis reaction. Examples of the hydrolyzable group include -OR^{h}, -OCOR^{h}, - O-N=CR^{h}₂, -NR^{h}₂, -NHR^{h} and halogen (in these formulae, R^{h} represents a substituted or unsubstituted C₁₋₄-alkyl).

In formula (1), R^{F1} each independently is Rf¹-R^{F}-O_{q}-, and in formula (2), R^{F2} is -Rf²ₚ-R^{F}-O_{q}-.

Rf¹ each independently is is C₁₋₁₆-alkyl group optionally substituted with one or more F.

In the C₁₋₁₆-alkyl group optionally substituted with one or more F, the "C₁₋₁₆-alkyl " may be straight or branched, and is preferably straight or branched C₁₋₆-alkyl, in particular C₁₋₃-alkyl, more preferably straight C₁₋₆-alkyl, and in particular C₁₋₃-alkyl.

R^{f1} is preferably C₁₋₁₆-alkyl group that is substituted with one or more F, more preferably CF₂H-(C₁₋₁₅-perfluoroalkylene), and further preferably C₁₋₁₆-perfluoroalkyl.

The C₁₋₁₆-perfluoroalkyl group may be straight or branched, and is preferably a straight or branched C₁₋₆-perfluoroalkyl, in particular C₁₋₃-perfluoroalkyl, more preferably straight C₁₋₆-perfluoroalkyl, in particular C₁₋₃-perfluoroalkyl, and specifically -CF₃, -CF₂CF₃, or - CF₂CF₂CF₃.

Rf² is C₁₋₆-alkylene optionally substituted with one or more F.

In the C₁₋₆-alkylene group optionally substituted with one or more F, the "C₁₋₆-alkylene " may be straight or branched, and is preferably straight or branched C₁₋₃-alkylene, and more preferably straight C₁₋₃-alkylene.

R^{f2} is preferably a C₁₋₆-alkylene substituted with one or more F, more preferably C₁₋₆-perfluoroalkylene, and still more preferably C₁₋₃-perfluoroalkylene.

The C₁₋₆-perfluoroalkylene group may be straight or branched, and is preferably straight or branched C₁₋₃-perfluoroalkylene, more preferably straight C₁₋₃-perfluoroalkylene, and specifically -CF₂-, -CF₂CF₂-, or - CF₂CF₂CF₂-.

p is 0 or 1. In one embodiment, p is 0. In another embodiment, p is 1.

q each independently is 0 or 1. In one embodiment, q is 0. In another embodiment, q is 1.

In R^{F1} and R^{F2}, R^{F} each independently is a divalent fluoropolyether group.

R^{F} is preferably a group of the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein R^{Fa} each independently is H, F or Cl; and a-f each independently are an integer of 0-200, with (a+b+c+d+e+f) ≥ 1, and the order of the repeating units in parentheses is not limited.

R^{Fa} is preferably H or F, and more preferably F.

a, b, c, d, e and f may preferably each independently be an integer of 0-100.

(a+b+c+d+e+f) is preferably 5 or more, and more preferably 10 or more, for example, 15 or more, or 20 or more. (a+b+c+d+e+f) is preferably 200 or less, and more preferably 100 or less, and still more preferably 60 or less, for example, 50 or less, or 30 or less.

The repeating units in parentheses with a, b, c, d, e and f may be linear or branched.

Regarding the repeating units in parentheses with a, b, c, d, e and f, examples of (OC₆F₁₂)- are - (OCF₂CF₂CF₂CF₂CF₂CF₂)-, - (OCF (CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, and -(OCF₂CF₂CF₂CF₂CF(CF₃))-. Examples of -(OC₅F₁₀)- are -(OCF₂CF₂CF₂CF₂CF₂)-, - (OCF (CF₃)CF₂CF₂CF₂)-, - (OCF₂CF(CF₃)CF₂CF₂)-, - (OCF₂CF₂CF(CF₃)CF₂)-, and -(OCF₂CF₂CF₂CF(CF₃))-. - (OC₄F₈)-may be -(OCF₂CF₂CF₂CF₂)-, -(OCF(CF₃)CF₂CF₂)-, - (OCF₂CF(CF₃)CF₂)-, -(OCF₂CF₂CF(CF₃)) -, -(OC(CF₃)₂CF₂)-, - (OCF₂C(CF₃)₂)-, -(OCF(CF₃)CF(CF₃))-, -(OCF(C₂F₅)CF₂)-, or - (OCF₂CF(C₂F₅)) -. -(OC₃F₆)- (that is, in the above formula, R^{Fa} is F) may be any of -(OCF₂CF₂CF₂)-, - (OCF(CF₃)CF₂)-, or - (OCF₂CF(CF₃)) -. -(OC₂F₄)- may be - (OCF₂CF₂) - or - (OCF(CF₃))-.

In one embodiment, the repeating unit is linear. That is, -(OC₆F₁₂)- is -(OCF₂CF₂CF₂CF₂CF₂CF₂)-, -(OC₅F₁₀)- is - (OCF₂CF₂CF₂CF₂CF₂)-, -(OC₄F₈)- is -(OCF₂CF₂CF₂CF₂)-, -(OC₃F₆)-is -(OCF₂CF₂CF₂)-, and -(OC₂F₄)- is -(OCF₂CF₂)-. When the repeating unit is linear, the lubricity of the surface-treating layer is improved.

In one embodiment, the repeating unit is branched. When the repeating unit is branched, the dynamic friction coefficient of the surface-treating layer can be increased.

In one embodiment, R^{F} is each independently at each occurrence a group of any of the following formulae (f1)-(f5) :

-(OC₃F₆)_{d}- (f1)

wherein d is an integer of 1-200;

-(OC₄F₈)_{c}-(OC₃F₆)_{d}-(OC₂F₄)ₑ-(OCF₂)_{f}⁻ (f2)

wherein c and d each independently are an integer of 0-30, e and f each independently are an integer of 1-200, and (c+d+e+f) is an integer of 10-200; and the order of the repeating units in parentheses is not limited;

-(R⁶-R⁷)_{g}- (f3)

wherein R⁶ is OCF₂ or OC₂F₄; R⁷ is OC₂F₄, OC₃F₆, OC₄F₈, OC₅F₁₀, and OC₆F₁₂, or is a combination of two or three of groups; and g is an integer of 2-100;

-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

wherein e is an integer of 1-200, a, b, c, d, and f are each independently an integer of 0-200, (a+b+c+d+e+f) is at least 1, and the order of the repeating units in parentheses provided with a, b, c, d, e or f is not limited; and

-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

wherein f is an integer of 1-200, a, b, c, d, and e are each independently an integer of 0-200, (a+b+c+d+e+f) is at least 1, and the order of the repeating units in parentheses provided with a, b, c, d, e or f is not limited.

In formula (f1), d is preferably an integer of 5-200, more preferably 10-100, still more preferably 15-50, for example 25-35. Formula (f1) is preferably a group represented by -(OCF₂CF₂CF₂)_{d}- or -(OCF(CF₃)CF₂)_{d}-, and more preferably a group represented by -(OCF₂CF₂CF₂)_{d}-.

In formula (f2), e and f are each independently, preferably an integer of 5-200, and more preferably 10-200. Further, (a+b+c+d+e+f) is preferably 5 or more, and more preferably 10 or more, for example, 15 or more, or 20 or more. In one embodiment, formula (f2) is preferably a group represented by -(OCF₂CF₂CF₂CF₂)_{c}-(OCF₂CF₂CF₂)_{d}-(OCF₂CF₂)ₑ-(OCF₂)_{f}-. In another embodiment, formula (f2) may be a group represented by -(OC₂F₄)ₑ-(OCF₂)_{f}-.

In formula (f3), R⁶ is preferably OC₂F₄. In formula (f3), R⁷ is preferably a group selected from OC₂F₄, OC₃F₆, and OC₄F₈, or a combination of two or three groups independently selected from these groups, and more preferably a group selected from OC₃F₆ and OC₄F₈. Examples of the combination of 2 or 3 groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. In formula (f3), g is preferably an integer of 3 or more, and more preferably 5 or more. g is preferably an integer of 50 or less. In formula (f3), OC₂F₄, OC₃F₆, OC₄F₈, OC₅F₁₀, and OC₆F₁₂ may be either straight or branched, and are preferably straight. In this embodiment, the formula (f3) is preferably -(OC₂F₄-OC₃F₆)_{g}- or -(OC₂F₄-OC₄F₈)_{g}-.

In formula (f4), e is preferably an integer of 1-100, and more preferably 5-100. (a+b+c+d+e+f) is preferably 5 or more, and more preferably 10 or more, such as 10-100.

In formula (f5), f is preferably an integer of 1-100, and more preferably 5-100. (a+b+c+d+e+f) is preferably 5 or more, and more preferably 10 or more, such as 10-100.

In one embodiment, R^{F} is a group of formula (f1).

In one embodiment, R^{F} is a group of formula (f2).

In one embodiment, R^{F} is a group of formula (f3).

In one embodiment, R^{F} is a group of formula (f4).

In one embodiment, R^{F} is a group of formula (f5).

The ratio of e to f in R^{F} (hereinafter, referred to as an "e/f ratio") is 0.1-10, preferably 0.2-5, more preferably 0.2-2, further preferably 0.2-1.5 or less, and still more preferably 0.2-0.85. With an e/f ratio of 10 or less, the lubricity, friction durability, and chemical resistance (such as durability against artificial sweat) of a surface-treating layer obtained from the compound are further increased. The smaller the e/f ratio is, the higher the lubricity and the friction durability of the surface-treating layer are. On the other hand, with an e/f ratio of 0.1 or more, the stability of the compound can be further increased. The larger the e/f ratio is, the higher the stability of the compound is.

In one embodiment, the e/f ratio is preferably 0.2-0.95, and more preferably 0.2-0.9.

In one embodiment, from the viewpoint of heat resistance, the e/f ratio is preferably 1.0 or more, and more preferably 1.0-2.0.

In the fluoropolyether group-containing compound, the number average molecular weight of the R^{F1} and R^{F2} moieties is not limited, and is, for example, 500-30,000, preferably 1,500-30,000, and more preferably 2,000-10,000. Herein, the number average molecular weight of R^{F1} and R^{F2} is defined as a value obtained by ¹⁹F-NMR measurement.

In another embodiment, the number average molecular weight of the R^{F1} and R^{F2} moieties may be 500-30,000, preferably 1,000-20,000, more preferably 2,000-15,000, and still more preferably 2,000-10,000, for example, 3,000-6,000.

In another embodiment, the number average molecular weight of the R^{F1} and R^{F2} moieties may be 4,000-30,000, preferably 5,000-10,000, and more preferably 6,000-10,000.

In the above formulae (1) and (2), R^{Si} is each independently at each occurrence a monovalent group containing a Si atom to which a hydroxyl group, a hydrolyzable group, a hydrogen atom or a monovalent organic group is bonded, and at least one R^{Si} is a monovalent group containing a Si atom to which a hydroxyl group or a hydrolyzable group is bonded.

In a preferable embodiment, R^{Si} is a monovalent group containing a Si atom to which a hydroxyl group or a hydrolyzable group is bonded.

In a preferable embodiment, R^{Si} is a group of formula (S1), (S2), (S3), or (S4) described below.

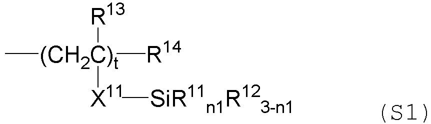

-SiR¹¹ₙ₁R¹²₃₋ₙ₁ (S2)

wherein, each independently at each occurrence,
- R¹¹: is OH or a hydrolyzable group;
- R¹²: is H or a monovalent organic group;
- R¹³: is H or a monovalent organic group;
- R¹⁴: is H or halogen;
- X¹¹: is a single bond or a divalent organic group;
- n1: is an integer of 0-3 in each (SiR¹¹ₙ₁R¹²₃₋ₙ₁) unit; and
- t: is an integer of 2-10;

R¹¹ is preferably, each independently, a hydrolyzable group.

R¹¹ is preferably, each independently, - OR^{h}, -OCOR^{h}, - O-N=CR^{h}₂, -NR^{h}₂, -NHR^{h}, or halogen, wherein R^{h} is optionally substituted C₁₋₄-alkyl, and more preferably -OR^{h} (that is, alkoxy). Examples of R^{h} include unsubstituted alkyl groups such as methyl, ethyl, propyl, isopropyl, n-butyl, and isobutyl; and substituted alkyl groups such as chloromethyl. Among such groups, alkyl, in particular unsubstituted alkyl, is preferable, and methyl or ethyl is more preferable. In one embodiment, R^{h} is methyl, and in another embodiment, R^{h} is ethyl.

In R¹² the monovalent organic group is a group excluding the hydrolyzable group.

In R¹², the monovalent organic group is preferably C₁₋₂₀-alkyl, more preferably C₁₋₆-alkyl, and further preferably methyl.

In the above formulae, n1 is an integer of 0-3 each independently in each (SiR¹¹ₙ₁R¹²₃₋ₙ₁) unit. However, in formula (S1) and (S2), at least one (SiR¹¹ₙ₁R¹²₃₋ₙ₁) unit in which n1 is 1-3 is present in the terminal R^{Si}_{β} and R^{Si}_{γ} moieties of the formulae (1) and (2) (hereinafter, also simply referred to as "terminal moieties" of the formulae (1) and (2)). That is, in such terminal moieties, not all n1 are 0 at the same time. In other words, in the terminal moieties of the formulae (1) and (2), at least one Si atom to which the hydroxyl group or the hydrolyzable group is bonded is present.

n1 is preferably an integer of 1-3, more preferably 2-3, and further preferably 3, each independently in each (SiR¹¹ₙ₁R¹²₃₋ₙ₁) unit.

In the above formulae, X¹¹ is each independently a single bond or a divalent organic group. Such a divalent organic group is preferably C₁₋₂₀-alkylene. Such C₁₋₂₀-alkylene may be straight or branched, but is preferably straight.

In a preferable embodiment, X¹¹ is each independently a single bond or straight C₁₋₆-alkylene, preferably a single bond or straight C₁₋₃-alkylene, more preferably a single bond or straight C₁₋₂-alkylene, and still more preferably straight C₁₋₂-alkylene.

In the above formula, R¹³ is each independently H or a monovalent organic group. Such a monovalent organic group is preferably C₁₋₂₀-alkyl. Such a C₁₋₂₀-alkyl may be straight or branched, but is preferably straight.

In a preferable embodiment, R¹³ is each independently H or straight C₁₋₆-alkyl, preferably H or straight C₁₋₃-alkyl, and preferably H or methyl.

In the above formula, t is an integer of 2-10, preferably 2-6.

In the above formula, R¹⁴ is each independently H or halogen. Such a halogen atom is preferably I, Cl or F, and more preferably F. In a preferable embodiment, R¹⁴ is H.

⁻SiR^{a1}ₖ₁R^{b1}ₗ₁R^{c1}ₘ₁ (S3)

wherein, each independently at each occurrence,
- Ra₁: is -Z¹-SiR²¹ₚ₁R²²_{q1}R²³ᵣ₁,
Z¹ is an oxygen atom or a divalent organic group;
R²¹ is -Z^{1'}-SiR^{21'}_{p1'}R^{22'}_{q1'}R^{23'}_{r1'},
Z^{1'} is O or a divalent organic group;
R^{21'} is -Z^{1"}-SiR^{22"}_{q1"}R^{23"}_{r1"},
Z^{1"} is O or a divalent organic group
R^{22"} is OH or a hydrolyzable group;
R^{23"} is H or a monovalent organic group;
q1" is an integer of 0-3;
r1" is an integer of 0-3;
R^{22'} is OH or a hydrolyzable group;
R^{23'} is H or a monovalent organic group;
p1' is an integer of 0-3;
q1' is an integer of 0-3;
r1' is an integer of 0-3;
R²² is OH or a hydrolyzable group;
R²³ is H or a monovalent organic group;
p1 is an integer of 0-3;
q1 is an integer of 0-3;
r1 is an integer of 0-3;
- R^{b1}: is OH or a hydrolyzable group;
- R^{c1}: is H or a monovalent organic group;
- k1: is an integer of 0-3;
- l1: is an integer of 0-3; and
- m1: is an integer of 0-3.

The right side of the structure denoted as Z¹ below binds to (SiR²¹ₚ₁R²²_{q1}R²³ᵣ₁).

In a preferable embodiment, Z¹ is a divalent organic group.

In a preferable embodiment, Z¹ does not contain a siloxane bond with the silicon atom to which the Z¹ binds. Preferably, in the formula (S3), (Si-Z¹-Si does not contain a siloxane bond.

Z¹ is preferably C₁₋₆-alkylene, -(CH₂)_{z1}-O-(CH₂)_{z2}-(wherein z1 is an integer of 0-6; for example 1-6, and z2 is an integer of 0-6; for example 1-6) or, -(CH₂)_{z3}-phenylene-(CH₂)_{z4}- (wherein z3 is an integer of 0-6; for example 1-6, and z4 is an integer of 0-6; for example 1-6). The C₁₋₆-alkylene group may be straight or branched, but is preferably straight. These groups may be substituted with one or more substituents selected from, for example, F, C₁₋₆-alkyl, C₂₋₆-alkenyl, and C₂₋₆-alkynyl, and are preferably unsubstituted.

In one embodiment, Z¹ is C₁₋₆-alkylene or -(CH₂)_{z3}-phenylene-(CH₂)_{z4}-, preferably -phenylene-(CH₂)_{z4}-. When Z¹ is such a group, light resistance, in particular ultraviolet resistance, can be more increased.

In another embodiment, Z¹ is C₁₋₃-alkylene. In one embodiment, Z¹ may be -CH₂CH₂CH₂-. In another embodiment, Z¹ may be -CH₂CH₂-.

The right side of the structure denoted as Z^{1'} below binds to (SiR^{21'}_{p1'}R^{22'}_{q1'}R^{23'}_{r1'}).

In a preferable embodiment, Z^{1'} is a divalent organic group.

In a preferable embodiment, Z^{1'} does not contain a siloxane bond with the silicon atom to which the Z^{1'} binds. Preferably, (Si-Z^{1'}-Si) does not contain a siloxane bond.

Z^{1'} is preferably C₁₋₆-alkylene, -(CH₂)_{z1'}-O-(CH₂)_{z2'}-(wherein z1' is an integer of 0-6; for example, an integer of 1-6, and z2' is an integer of 0-6; for example 1-6) or, -(CH₂)_{z3'}-phenylene-(CH₂)_{z4'}- (wherein z3' is an integer of 0-6; for example 1-6, and z4' is an integer of 0-6; for example 1-6). Such C₁₋₆-alkylene may be straight or branched, but is preferably straight. These groups may be substituted with one or more substituents selected from, for example, F, C₁₋₆-alkyl, C₂₋₆-alkenyl, and C₂₋₆-alkynyl, and are preferably unsubstituted.

In one embodiment, Z^{1'} is C₁₋₆-alkylene or -(CH₂)_{z3'}-phenylene- (CH₂)_{z4'}-, preferably -phenylene- (CH₂)_{z4'}-. When Z^{1'} is such a group, light resistance, in particular ultraviolet resistance, can be more increased.

In another embodiment, Z^{1'} is C₁₋₃-alkylene. In one embodiment, Z^{1'} may be -CH₂CH₂CH₂-. In another embodiment, Z^{1'} may be -CH₂CH₂-.

The right side of the structure denoted as Z^{1"} binds to (SiR^{22"}_{q1"}R^{23"}_{r1"}).

In a preferable embodiment, Z^{1"} is a divalent organic group.

In a preferable embodiment, Z^{1"} does not contain a siloxane bond with the silicon atom to which the Z^{1"} binds. Preferably, (Si-Z^{1"}-Si) does not contain a siloxane bond.

Z^{1"} is preferably C₁₋₆-alkylene, -(CH₂)_{z1"}-O-(CH₂)_{z2"}-(wherein z1" is an integer of 0-6; for example, an integer of 1-6, and z2" is an integer of 0-6; for example 1-6) or, -(CH₂)_{z3"}-phenylene-(CH₂)_{z4"}- (wherein z3" is an integer of 0-6; for example 1-6, and z4" is an integer of 0-6; for example 1-6). Such C₁₋₆-alkylene may be straight or branched, but is preferably straight. These groups may be substituted with one or more substituents selected from, for example, F, C₁₋₆-alkyl, C₂₋₆-alkenyl, and C₂₋₆-alkynyl, and are preferably unsubstituted.

In one embodiment, Z^{1"} is C₁₋₆-alkylene or -(CH₂)_{z3"}-phenylene- (CH₂)_{z4"}-, preferably -phenylene- (CH₂)_{z4"}-. When Z^{1"} is such a group, light resistance, in particular ultraviolet resistance, can be more increased.

In another embodiment, Z^{1"} is C₁₋₃-alkylene. In one embodiment, Z^{1"} may be -CH₂CH₂CH₂-. In another embodiment, Z^{1"} may be -CH₂CH₂-.

R^{22"} is preferably, each independently a hydrolyzable group.

R^{22"} is preferably, each independently - OR^{h}, -OCOR^{h}, - O-N=CR^{h}₂, -NR^{h}₂, -NHR^{h}, or halogen, wherein R^{h} is optionally substituted C₁₋₄-alkyl, more preferably -OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferable, and methyl or ethyl is more preferable. In one embodiment, R^{h} is methyl, and in another embodiment, R^{h} is ethyl.

In R^{23"} the monovalent organic group is a group excluding the hydrolyzable group.

In R^{23"}, the monovalent organic group is preferably C₁₋₂₀-alkyl, more preferably C₁₋₆-alkyl, and further preferably methyl.

The total of q1" and r1" is 3 in (SiR^{22"}_{q1"}R^{23"}_{r1"}) unit.

q1" is preferably an integer of 1-3, more preferably 2-3, and further preferably 3, each independently in each (SiR^{22"}_{q1"}R^{23"}_{r1"}) unit.

R^{22'} is preferably, each independently a hydrolyzable group.

R^{22'} is preferably, each independently, - OR^{h}, -OCOR^{h}, -O-N=CR^{h}₂, -NR^{h}₂, -NHR^{h}, or halogen, wherein R^{h} is optionally substituted C₁₋₄-alkyl, more preferably -OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferable, and methyl or ethyl is more preferable. In one embodiment, R^{h} is methyl, and in another embodiment, R^{h} is ethyl.

In R^{23'} the monovalent organic group is a group excluding the hydrolyzable group.

In R^{23'}, the monovalent organic group is preferably C₁₋₂₀-alkyl, more preferably C₁₋₆-alkyl, and further preferably methyl.

The total of p', q1' and r1' is 3 in (SiR^{21'}_{p1'}R^{22'}_{q1'}R^{23'}_{r1'}) unit.

In one embodiment, p1' is 0.

In one embodiment, p1' may be an integer of 1-3, an integer of 2-3, or 3, each independently in each (SiR^{21'}_{p1'}R^{22'}_{q1'}R^{23'}_{r1'}) unit. In a preferable embodiment, p1' is 3.

In one embodiment, q1' is an integer of 1-3, preferably 2-3, and more preferably 3, each independently in each (SiR^{21'}_{p1'}R^{22'}_{q1'}R^{23'}_{r1'}) unit.

In one embodiment, p1' is 0, q1' is an integer of 1-3, preferably 2-3, and further preferably 3, each independently in each (SiR^{21'}_{p1'}R^{22'}_{q1'}R^{23'}_{r1'}) unit.

R²² is preferably, each independently, a hydrolyzable group.

R²² is preferably, each independently, - OR^{h}, -OCOR^{h}, - O-N=CR^{h}₂, -NR^{h}₂, -NHR^{h}, or halogen, wherein R^{h} is optionally substituted C₁₋₄-alkyl, more preferably -OR^{h} (that is, alkoxy). Examples of R^{h} include unsubstituted alkyl such as methyl, ethyl, propyl, isopropyl, n-butyl, and isobutyl; and substituted alkyl such as a chloromethyl group. Among such groups, alkyl, in particular unsubstituted alkyl, is preferable, and methyl or ethyl is more preferable. In one embodiment, R^{h} is methyl, and in another embodiment, R^{h} is ethyl.

In R²³ the monovalent organic group is a group excluding the hydrolyzable group.

In R²³, the monovalent organic group is preferably C₁₋₂₀-alkyl, more preferably C₁₋₆-alkyl, and further preferably methyl.

The total of p, q1 and r1 is 3 in (SiR²¹ₚ₁R²²_{q1}R²³ᵣ₁) unit.

In one embodiment, p1 is 0.

In one embodiment, p1 may be an integer of 1-3, an integer of 2-3, or 3, each independently in each (SiR²¹ₚ₁R²²_{q1}R²³ᵣ₁) unit. In a preferable embodiment, p1 is 3.

In one embodiment, q1 is an integer of 1-3, preferably 2-3, and more preferably 3, each independently in each (SiR²¹ₚ₁R²²_{q1}R²³ᵣ₁) unit.

In one embodiment, p1 is 0, q1 is an integer of 1-3, preferably 2-3, and further preferably 3, each independently in each (SiR²¹ₚ₁R²²_{q1}R²³ᵣ₁) unit.

R^{b1} is preferably, each independently, a hydrolyzable group.

R^{b1} is preferably, each independently , - OR^{h}, -OCOR^{h}, -O-N=CR^{h}₂, -NR^{h}₂, -NHR^{h}, or halogen, wherein R^{h} is optionally substituted C₁₋₄-alkyl, more preferably -OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferable, and methyl or ethyl is more preferable. In one embodiment, R^{h} is methyl, and in another embodiment, R^{h} is ethyl.

In R^{c1} the monovalent organic group is a group excluding the hydrolyzable group.

In R^{c1}, the monovalent organic group is preferably C₁₋₂₀-alkyl, more preferably C₁₋₆-alkyl, and further preferably methyl.

The total of p, l1 and m1 is 3 in (SiR^{a1}ₖ₁R^{b1}₁₁R^{C1}ₘ₁) unit.

In one embodiment, k1 is an integer of 1-3, preferably 2-3, and more preferably 3, each independently in each (SiR^{a1}ₖ₁R^{b1}ₗ₁R^{c1}ₘ₁) unit. In a preferable embodiment, k1 is 3.

In the formulae (1) and (2), when R^{Si} is a group of formula (S3), preferably, at least two Si atoms to which OH or a hydrolyzable group is bonded are present in the terminal moieties of the formulae (1) and (2).

In a preferable embodiment, the group of formula (S3) has any one of -Z¹-SiR²²_{q1}R²³ᵣ₁ (wherein q1 is an integer of 1-3, preferably 2 or 3, more preferably 3, and r1 is an integer of 0-2.), -Z^{1'}-SiR^{22'}_{q1'}R^{23'}_{r1'} (wherein q1' is an integer of 1-3, preferably 2 or 3, more preferably 3, and r1' is an integer of 0-2), or -Z^{1"}-SiR^{22"}_{q1"}R^{23"}_{r1"} (wherein q1" is an integer of 1-3, preferably 2 or 3, more preferably 3, and r1" is an integer of 0-2).

In a preferable embodiment, in formula (S3), when R^{21'} is present, in at least one, preferably all R^{21'}, q1" is an integer of 1-3, preferably 2 or 3, more preferably 3.

In a preferable embodiment, in formula (S3), when R²¹ is present, in at least one, preferably all R²¹, p1' is 0, and q1' is an integer of 1-3, preferably 2 or 3, more preferably 3.

In a preferable embodiment, in formula (S3), when R^{a1} is present, in at least one, preferably all R^{a1}, p1 is 0, and q1 is an integer of 1-3, preferably 2 or 3, more preferably 3.

In a preferable embodiment, in formula (S3), k1 is 2 or 3, preferably 3, p1 is 0, q1 is 2 or 3, preferably 3.

-CR^{d1}ₖ₂R^{e1}ₗ₂R^{f1}ₘ₂ (S4)

wherein, each independently at each occurrence,
- R^{d1}: is -Z²-CR³¹ₚ₂R³²_{q2}R³³ᵣ₂,
Z² is a single bond, an oxygen atom or a divalent organic group;
R³¹ is -Z^{2'}-CR^{32'}_{q2'}R^{33'}_{r2'},
Z^{2'} is a single bond, O or a divalent organic group;
R^{32'} is -Z³-SiR³⁴ₙ₂R³⁵₃₋ₙ₂;
R^{33'} is H, OH or a monovalent organic group;
q2' is an integer of 0-3;
r2' is an integer of 0-3;
R³² is -Z³-SiR³⁴ₙ₂R³⁵₃₋ₙ₂,
Z³ is a single bond, O or a divalent organic group;
R³⁴ is OH or a hydrolyzable group;
R³⁵ is H or a monovalent organic group;
n2 is an integer of 0-3;
R³³ is H, OH, or a monovalent organic group;
p2 is an integer of 0-3;
q2 is an integer of 0-3;
r2 is an integer of 0-3;
- R^{e1}: is a group R³² as defined above;
- R^{f1}: is H, OH or a monovalent organic group;
- k2: is an integer of 0-3;
- l2: is an integer of 0-3; and
- m2: is an integer of 0-3.

The right side of the structure denoted as Z² binds to (CR³¹ₚ₂R³²_{q2}R³³ᵣ₂).

In a preferable embodiment, Z² is a divalent organic group.

Z² is preferably C₁₋₆-alkylene, -(CH₂)_{z5}-O-(CH₂)_{z6}-(wherein z5 is an integer of 0-6; for example 1-6, and z6 is an integer of 0-6; for example 1-6) or, -(CH₂)_{z7}-phenylene-(CH₂)_{z8}- (wherein z7 is an integer of 0-6; for example 1-6, and z8 is an integer of 0-6; for example 1-6). Such C₁₋₆-alkylene may be straight or branched, but is preferably straight. These groups may be substituted with one or more substituents selected from, for example, F, C₁₋₆-alkyl, C₂₋₆-alkenyl, and C₂₋₆-alkynyl, and are preferably unsubstituted.

In one embodiment, Z² is C₁₋₆-alkylene or -(CH₂)_{z7}-phenylene- (CH₂)_{z8}-, preferably -phenylene- (CH₂)_{z8}-. When Z² is such a group, light resistance, in particular ultraviolet resistance, can be more increased.

In another embodiment, Z² is C₁₋₃-alkylene. In one embodiment, Z² may be -CH₂CH₂CH₂-. In another embodiment, Z² may be -CH₂CH₂-.

The right side of the structure denoted as Z^{2'} binds to (CR^{32'}_{q2'}R^{33'}_{r2'}).

Z^{2'} is preferably C₁₋₆-alkylene, -(CH₂)_{z5'}-O-(CH₂)_{z6'}-(wherein z5' is an integer of 0-6; for example 1-6, and z6' is an integer of 0-6; for example 1-6) or, -(CH₂)_{z7'}-phenylene-(CH₂)_{z8'}- (wherein z7' is an integer of 0-6; for example 1-6, and z8' is an integer of 0-6; for example 1-6). Such a C₁₋₆ alkylene group may be straight or branched, but is preferably straight. These groups may be substituted with one or more substituents selected from, for example, F, C₁₋₆-alkyl, C₂₋₆-alkenyl, and C₂₋₆-alkynyl, and are preferably unsubstituted.

In one embodiment, Z^{2'} is C₁₋₆-alkylene or -(CH₂)_{z7'}-phenylene-(CH₂)_{z8'}-, preferably -phenylene- (CH₂)_{z8'}-. When Z^{2'} is such a group, light resistance, in particular ultraviolet resistance, can be more increased.

In another embodiment, Z^{2'} is C₁₋₃-alkylene. In one embodiment, Z^{2'} may be -CH₂CH₂CH₂-. In another embodiment, Z^{2'} may be -CH₂CH₂-.

The right side of the structure denoted as Z³ binds to (SiR³⁴ₙ₂R³⁵₃₋ₙ₂ ).

In one embodiment, Z³ is an oxygen atom.

In one embodiment, Z³ is a divalent organic group.

Z³ is preferably C₁₋₆-alkylene, -(CH₂)_{z5"}-O-(CH₂)_{z6"}-(wherein z5" is an integer of 0-6; for example 1-6, and z6" is an integer of 0-6; for example 1-6) or, -(CH₂)_{z7"}-phenylene-(CH₂)_{z8"}- (wherein z7" is an integer of 0-6; for example 1-6, and z8" is an integer of 0-6; for example 1-6). Such C₁₋₆-alkylene may be straight or branched, but is preferably straight. These groups may be substituted with one or more substituents selected from, for example, F, C₁₋₆-alkyl, C₂₋₆-alkenyl, and C₂₋₆-alkynyl, and are preferably unsubstituted.

In one embodiment, Z³ is C₁₋₆-alkylene or -(CH₂)_{z7"}-phenylene- (CH₂)_{z8"}-, preferably -phenylene- (CH₂)_{z8"}-. When Z³ is such a group, light resistance, in particular ultraviolet resistance, can be more increased.

In another embodiment, Z³ is C₁₋₃-alkylene. In one embodiment, Z³ may be -CH₂CH₂CH₂-. In another embodiment, Z³ may be -CH₂CH₂-.

R³⁴ is preferably, each independently, a hydrolyzable group.

R³⁴ is preferably, each independently, - OR^{h}, -OCOR^{h}, - O-N=CR^{h}₂, -NR^{h}₂, -NHR^{h}, or halogen, wherein R^{h} is optionally substituted C₁₋₄-alkyl, more preferably -OR^{h} (that is, an alkoxy group). Examples of R^{h} include unsubstituted alkyl groups such as methyl, ethyl, propyl, isopropyl, n-butyl, and isobutyl; and substituted alkyl such as chloromethyl. Among such groups, alkyl, in particular unsubstituted alkyl, is preferable, and methyl or ethyl is more preferable. In one embodiment, R^{h} is methyl, and in another embodiment, R^{h} is ethyl.

In R³⁵ the monovalent organic group is a group excluding the hydrolyzable group.

In R³⁵, the monovalent organic group is preferably C₁₋₂₀-alkyl, more preferably C₁₋₆-alkyl, and further preferably methyl.

In the above formula, n2 is an integer of 0-3 each independently in each (SiR³⁴ₙ₂R³⁵₃₋ₙ₂) unit. However, in a case where R^{Si} is a group represented by the formula (S4), at least one (SiR³⁴ₙ₂R³⁵₃₋ₙ₂) unit in which n2 is 1-3 is present in the terminal moieties of the formulae (1) and (2). That is, in such terminal moieties, not all n2 are 0 at the same time. In other words, in the terminal moieties of the formulae (1) (2), at least one Si atom to which the hydroxyl group or the hydrolyzable group is bonded is present.

n2 is preferably an integer of 1-3, more preferably 2-3, and further preferably 3, each independently in each (SiR³⁴ₙ₂R³⁵₃₋ₙ₂) unit.

In R^{33'} the monovalent organic group is a group excluding the hydrolyzable group.

In R^{33'}, the monovalent organic group is preferably C₁₋₂₀-alkyl, more preferably C₁₋₆-alkyl, and further preferably methyl.

In one embodiment, R^{33'} is OH.

In another embodiment, in R^{33'}, the monovalent organic group is preferably C₁₋₂₀-alkyl, and more preferably C₁₋₆-alkyl.

The total of q2' and r2' is 3 in (SiR^{32'}_{q2'}R^{33'}_{r2'}) unit.

q2' is preferably an integer of 1-3, more preferably 2-3, and further preferably 3, each independently in each (SiR^{32'}_{q2'}R^{33'}_{r2'}) unit.

In R³³ the monovalent organic group is a group excluding the hydrolyzable group.

In R³³, the monovalent organic group is preferably C₁₋₂₀-alkyl, more preferably C₁₋₆-alkyl, and further preferably methyl.

In one embodiment, R³³ is OH.

In another embodiment, in R³³, the monovalent organic group is preferably C₁₋₂₀-alkyl, and more preferably C₁₋₆-alkyl.

The total of p2, q2, and r2 is 3 in (CR³¹ₚ₂R³²_{q2}R³³ᵣ₂) unit.

In one embodiment, p2 is 0.

In one embodiment, p2 may be an integer of 1-3, an integer of 2-3, or 3, each independently in each (CR³¹ₚ₂R³²_{q2}R³³ᵣ₂) unit. In a preferable embodiment, p2 is 3.

In one embodiment, q2 is an integer of 1-3, preferably 2-3, and more preferably 3, each independently in each (CR³¹ₚ₂R³²_{q2}R³³ᵣ₂) unit.

In one embodiment, p2 is 0, q2 is an integer of 1-3, preferably 2-3, and further preferably 3, each independently in each (CR³¹ₚ₂R³²_{q2}R³³ᵣ₂) unit.

In R^{f1} the monovalent organic group is a group excluding the hydrolyzable group.

In R^{f1}, the monovalent organic group is preferably C₁₋₂₀-alkyl, more preferably C₁₋₆-alkyl, and further preferably methyl.

In one embodiment, R^{f1} is OH.

In another embodiment, in R^{f1}, the monovalent organic group is preferably C₁₋₂₀-alkyl, and more preferably C₁₋₆-alkyl.

The total of k2, l2, and m2 is 3 in (CR^{d1}ₖ₂R^{e1}ₗ₂R^{f1}ₘ₂) unit.

In one embodiment, when R^{Si} is a group of formula (S4), two or more, for example, 2-27, preferably 2-9, more preferably **2-6,** further preferably **2-3,** particularly preferably 3 (SiR³⁴ₙ₂R³⁵₃₋ₙ₂) units in which n2 is **1-3,** preferably 2 or **3,** more preferably 3 are present in each terminal moiety of the formula (1) and the formula (2).

In a preferable embodiment, in formula (S4), when R^{32'} is present, in at least one, preferably all R^{32'}, n2 is an integer of **1-3,** preferably 2 or **3,** more preferably **3.**

In a preferable embodiment, in formula (S4), when R³² is present, in at least one, preferably all R³², n2 is an integer of **1-3,** preferably 2 or **3,** more preferably **3.**

In a preferable embodiment, in formula (S4), when R^{e1} is present, in at least one, preferably all R^{e1}, n2 is an integer of **1-3,** preferably 2 or **3,** more preferably **3.**

In a preferable embodiment, in formula (S4), k2 is **0,** l2 is 2 or **3,** preferably **3,** and n2 is 2 or **3,** preferably **3.**

In one embodiment, R^{Si} is a group of formula (S2), (S3) or (S4).

In one embodiment, R^{Si} is a group of formula (S1), (S3) or (S4).

In one embodiment, R^{Si} is a group of formula (S3) or (S4).

In one embodiment, R^{Si} is a group of formula (S1).

In one embodiment, R^{Si} is a group of formula (S2).

In one embodiment, R^{Si} is a group of formula (S3).

In one embodiment, R^{Si} is a group of formula (S4).

In the formulae (1) and (2), X^{A} is interpreted as a linker, connecting a fluoropolyether moiety (R^{F1} and R^{F2}) which mainly provides, e.g., water-repellency and surface lubricity, and a moiety (R^{Si}) providing binding ability to a substrate. Accordingly, X^{A} may be a single bond or any group as long as the compound represented by the formula (I) or (2) can stably exist.

In the formula (1), α is an integer of 1-9, and β is an integer of 1-9. The integers represented by α and β may vary depending on the valence of X^{A}. The sum (α+β) is the same as the valence of X^{A}. For example, when X^{A} is a decavalent organic group, (α+β) is 10; for example, a case where α is 9 and β is 1, and α is 5 and β is 5, or α is 1 and β is 9, can be considered. When X^{A} is a divalent organic group, α and β each are 1.

In the formula (2), y is an integer of 1-9. y may vary according to the valence of X^{A}. That is, y is a value obtained by subtracting 1 from the valence of X^{A}.

Each X^{A} is independently a single bond or a di- to decavalent organic group.

The di- to decavalent organic group in X^{A} is preferably a di- to octavalent organic group. In one embodiment, the di- to decavalent organic group is preferably a di- to tetravalent organic group, and more preferably a divalent organic group. In another embodiment, the di- to decavalent organic group is preferably a tri- to octavalent organic group, and more preferably a tri- to hexavalent organic group.

In one embodiment, X^{A} is a single bond or a divalent organic group, α is 1, and β is 1.

In one embodiment, X^{A} is a single bond or a divalent organic group, γ is 1.

In one embodiment, X^{A} is a tri- to hexavalent organic group, α is 1, and β is 2-5.

In one embodiment, X^{A} is a tri- to hexavalent organic group, and γ is 2-5.

In one embodiment, X^{A} is a trivalent organic group, α is 1, and β is 2.

In one embodiment, X^{A} is a trivalent organic group, and γ is 2.

When X^{A} is a single bond or a divalent organic group, the formulae (1) and (2) are represented by the following formulae (1') and (2').

R^{F1}-X^{A}-R^{Si} (1')

R^{Si}-X^{A}-R^{F2}-X^{A}-R^{Si} (2')

In one embodiment, X^{A} is a single bond.

In another embodiment, X^{A} is a divalent organic group.

In one embodiment, examples of X^{A} include a single bond or a divalent organic group of the formula:

-(R⁵¹)ₚ₅-(X⁵¹)_{q5}-

Wherein, each independently at each occurrence,
R⁵¹ is a single bond, -(CH₂)ₛ₅-, o-, m-, or p-phenylene, and is preferably -(CH₂)ₛ₅-;
s5 is an integer of 1-20, preferably 1-6, more preferably 1-3 and still more preferably 1 or 2;
X⁵¹ is -(X⁵²)ₗ₅-;
X⁵² is a group selected from -O-, -S-, an o-, m-, or p-phenylene group, -C (O)O-, -Si(R⁵³)₂-, - (Si(R⁵³)₂O)ₘ₅-Si(R⁵³)₂-, -CONR⁵⁴-, -O-CONR⁵⁴-, -NR⁵⁴- and -(CH₂)ₙ₅-;
R⁵³ is phenyl, C₁₋₆-alkyl or C₁₋₆-alkoxy, and preferably phenyl or C₁₋₆-alkyl, and more preferably methyl;
R⁵⁴ is H, phenyl or C₁₋₆-alkyl (preferably methyl);
m5 is an integer of 1-100, preferably 1-20;
n5 is an integer of 1-20, preferably 1-6, and more preferably 1-3;
l5 is an integer of 1-10, preferably 1-5, and more preferably 1-3;
p5 is 0 or 1; and
q5 is 0 or 1;
provided that at least one of p5 and q5 is 1 and the order of the repeating units in parentheses provided with p5 or q5 is not limited.

Here, R^{A} (typically, hydrogen atoms of R^{A}) is optionally substituted with one or more substituents selected from F, C₁₋₃-alkyl, and C₁₋₃-fluoroalkyl. In a preferable embodiment, R^{A} is not substituted with these groups.

In a preferable embodiment, X^{A} is each independently - (R⁵¹)ₚ₅-(X⁵¹)_{q5}-R⁵⁶-. R⁵⁶ represents a single bond, -(CH₂)ₜ₅-, o-, m-, or a p-phenylene, and is preferably -(CH₂)ₜ₅-. t5 is an integer of 1-20, preferably 2-6, and more preferably 2-3. Here, R⁵⁶ (typically, hydrogen atoms of R⁵⁶) is optionally substituted with one or more substituents selected from F, C₁₋₃-alkyl, and C₁₋₃-fluoroalkyl. In a preferable embodiment, R⁵⁶ is not substituted with these groups.

Preferably, X^{A} may each independently be
a single bond,

   -X^{f5}-(C₁₋₂₀-alkylene),

   -X^{f5}-R⁵¹-X⁵³-R⁵²-

   , or

   -X^{f5}-X⁵⁴-R⁵-,
wherein R⁵¹ and R⁵² have the same definition as above; and
X⁵³ represents

   -O-,

   -S-,

   -C(O)O-,

   -CONR⁵⁴-,

   -O-CONR⁵⁴-,

   -Si (R⁵³)₂-,

   - (Si(R⁵³)₂O)ₘ₅-Si(R⁵³)₂-,

   -O-(CH2)ᵤ₅-(Si (R⁵³)₂O)ₘ₅-Si(R⁵³)₂-,

   -O-(CH₂)ᵤ₅-Si(R⁵³)₂-O-Si(R⁵³)₂-CH₂CH₂-Si(R⁵³)₂-O-Si(R⁵³)₂-,

   -O-(CH₂)ᵤ₅-Si(OCH₃)₂OSi(OCH₃)₂-,

   -CONR⁵⁴-(CH2) ᵤ₅-(Si(R⁵³)₂O)ₘ₅-Si(R⁵³)₂-,

   -CONR⁵⁴-(CH₂)ᵤ₅-N(R⁵⁴)-

   , or

   -CONR⁵⁴-(o-, m- or p-phenylene) -Si (R⁵³)₂-,
(wherein R⁵³, R⁵⁴, and m5 have the same definition as above, and
u5 is an integer of 1-20, preferably 2-6, and more preferably 2-3);
X⁵⁴ represents

   -S-,

   -C(O)O-,

   -CONR⁵⁴-,

   -O-CONR⁵⁴-,

   -CONR⁵⁴-(CH2) ᵤ₅-(Si (R⁵⁴)₂O)ₘ₅-Si(R⁵⁴)₂-,

   -CONR⁵⁴-(CH₂)ᵤ₅-N(R⁵⁴)-

   , or

   -CONR⁵⁴-(o-, m- or p-phenylene)-Si(R⁵⁴)₂-,
(wherein each symbol has the same definition as above); and
X^{f5} is a single bond or C₁₋₆-perfluoroalkylene, preferably C₁₋₄-perfluoroalkylene, and more preferably C₁₋₂-perfluoroalkylene, such as difluoromethylene.

More preferably, X^{A} may each independently be
a single bond,

   -X^{f5}-(C₁₋₂₀-alkylene),

   -X^{f5}-(CH₂)ₛ₅-X⁵³-,

   -X^{f5}-(CH₂)ₛ₅-X⁵³-(CH₂)ₜ₅-,

   -X^{f5}-X⁵⁴-

   , or

   -X^{f5}-X⁵⁴-(CH₂)ₜ₅-,
wherein X^{f5}, X⁵³, X⁵⁴, s5, and t5 have the same definition as above.

More preferably, X^{A} may each independently be
a single bond,

   an -X^{f5}-C₁₋₂₀ alkylene group,

   -X^{f5}-(CH₂)ₛ₅-X⁵³-(CH₂)ₜ₅-

   , or

   -X^{f5}-X⁵⁴-(CH₂)ₜ₅-,
wherein each symbol has the same definition as above.

In a preferable embodiment, X^{A} may each independently be
a single bond,

   -X^{f5}-(C₁₋₂₀-alkylene),

   -X^{f5}-(CH₂)ₛ₅-X⁵³-,

   or

   -X^{f5}-(CH₂)ₛ₅-X⁵³-(CH₂)ₜ₅-,
wherein
X⁵³ is -O-, -CONR⁵⁴-, or -O-CONR⁵⁴-,
R⁵⁴ is, phenyl, or C₁₋₆-alkyl,
s5 is an integer of 1-20; and
t5 is an integer of 1-20.

In one embodiment, X^{A} may each independently be
a single bond,

   an -X^{f5}-(C₁₋₂₀-alkylene),

   -X^{f5}-(CH₂)ₛ₅-O-(CH₂)ₜ₅-,

   -X^{f5}-(CH₂)ₛ₅-(Si(R⁵³)₂O)ₘ₅-Si(R⁵³)₂-(CH₂)ₜ₅-,

   -X^{f5}-(CH₂)ₛ₅-O-(CH₂)ᵤ₅-(Si(R⁵³)₂O)ₘ₅-Si(R⁵³)₂-(CH₂)ₜ₅-,

   or

   -X^{f5}-(CH₂)ₛ₅-O-(CH₂)ₜ₅-Si(R⁵³)₂-(CH₂)ᵤ₅-Si(R⁵³)₂-(CᵥH₂ᵥ)-
wherein X^{f5}, R⁵³, m5, s5, t5, and u5 have the same definition as above, and v5 is an integer of 1-20, preferably an integer of 2-6, and more preferably an integer of 2-3.

In the above formula, -(CᵥH₂ᵥ)- may be straight or branched and may be, for example, -CH₂CH₂-, -CH₂CH₂CH₂-, - CH(CH₃)-, or -CH(CH₃)CH₂-.

X^{A} each independently is optionally substituted with one or more substituents selected from F, C₁₋₃-alkyl, and C₁₋₃-fluoroalkyl (preferably, C₁₋₃-perfluoroalkyl). In one embodiment, X^{A} is unsubstituted.

The left side of each formula of X^{A} binds to R^{F1} or R^{F2}, and the right side binds to R^{Si}.

In one embodiment, X^{A} may each independently be a group other than -O-(C₁₋₆-alkylene).

In another embodiment, examples of X^{A} include the following groups: 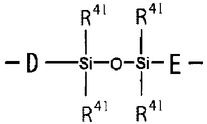 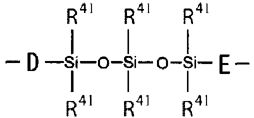 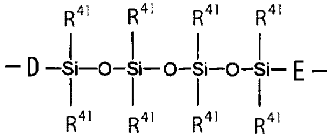 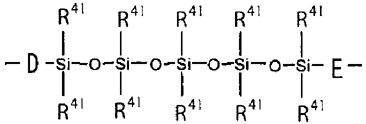 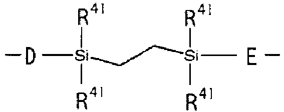 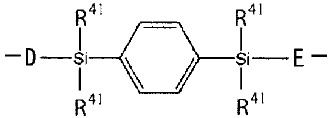 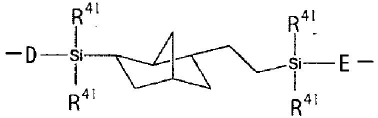
wherein R⁴¹ each independently is H, phenyl, C₁₋₆-alkyl or a C₁₋₆-alkoxy, and preferably methyl; and
D is a group selected from

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH- (CH₂)₃-,

   -CON (CH₃)- (CH₂)₃-, and

   -CON(Ph)-(CH₂)₃-

   (wherein Ph stands for phenyl) and a group of the formula: 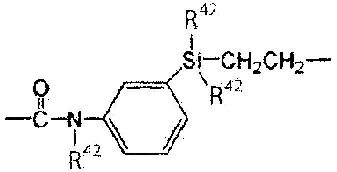
wherein R⁴² each independently is H, C₁₋₆-alkyl or C₁₋₆-alkoxy, preferably methyl or methoxy, and more preferably methyl),
E is -(CH₂)ₙ- (n is an integer of 2-6), and
D binds to R^{F1} or R^{F2} of the molecular backbone and E binds to R^{Si}.

Specific examples of the above-described X^{A} include, for example:
a single bond,

   -CH₂OCH₂-,

   -CH₂O(CH₂)₂-,

   -CH₂O(CH₂)₃-,

   -CH₂O(CH₂)₆-,

   -CF₂-CH₂-O-CH₂-,

   -CF₂-CH₂-O-(CH₂)₂-,

   -CF₂-CH₂-O-(CH₂)₃-,

   -CF₂-CH₂-O-(CH₂)₆-,

   -CH₂O(CH₂)₃Si(CH₃)₂OSi(CH₃)₂(CH₂)₂-,

   -CH₂O(CH₂)₃Si(CH₃)₂OSi(CH₃)₂OSi(CH₃)₂(CH₂)₂-,

   -CH₂O(CH₂)₃Si(CH₃)₂O(Si(CH₃)₂O)₂Si(CH₃)₂(CH₂)₂-,

   -CH₂O(CH₂)₃Si(CH₃)₂O(Si(CH₃)₂O)₃Si(CH₃)₂(CH₂)₂-,

   -CH₂O(CH₂)₃Si(CH₃)₂O(Si(CH₃)₂O)₁₀Si(CH₃)₂(CH₂)₂-,

   -CH₂O(CH₂)₃Si(CH₃)₂O(Si(CH₃)₂O)₂₀Si(CH₃)₂(CH₂)₂-,

   -CH₂OCF₂CHFOCF₂-,

   -CH₂OCF₂CHFOCF₂CF₂-,

   -CH₂OCF₂CHFOCF₂CF₂CF₂-,

   -CH₂OCH₂CF₂CF₂OCF₂-,

   -CH₂OCH₂CF₂CF₂OCF₂CF₂-,

   -CH₂OCH₂CF₂CF₂OCF₂CF₂CF₂-,

   -CH₂OCH₂CF₂CF₂OCF(CF₃)CF₂OCF₂-,

   -CH₂OCH₂CF₂CF₂OCF(CF₃)CF₂OCF₂CF₂-,

   -CH₂OCH₂CF₂CF₂OCF(CF₃)CF₂OCF₂CF₂CF₂-,

   -CH₂OCH₂CHFCF₂OCF₂-,

   -CH₂OCH₂CHFCF₂OCF₂CF₂-,

   -CH₂OCH₂CHFCF₂OCF₂CF₂CF₂-,

   -CH₂OCH₂CHFCF₂OCF(CF₃)CF₂OCF₂-,

   -CH₂OCH₂CHFCF₂OCF(CF₃)CF₂OCF₂CF₂-,

   -CH₂OCH₂CHFCF₂OCF(CF₃)CF₂OCF₂CF₂CF₂-

   -CH₂OCF₂CHFOCF₂CF₂CF₂-C(O)NH-CH₂-,

   - CH₂OCH₂(CH₂)₇CH₂Si(OCH₃)₂OSi(OCH₃)₂(CH₂)₂Si(OCH₃)₂OSi(OCH₃)₂(CH₂ )₂-,

   -CH₂OCH₂CH₂CH₂Si(OCH₃)₂OSi(OCH₃)₂(CH₂)₃-,

   -CH₂OCH₂CH₂CH₂Si(OCH₂CH₃)₂OSi(OCH₂CH₃)₂(CH₂)₃-,

   -CH₂OCH₂CH₂CH₂Si(OCH₃)₂OSi(OCH₃)₂(CH₂)₂-,

   -CH₂OCH₂CH₂CH₂Si(OCH₂CH₃)₂OSi(OCH₂CH₃)₂(CH₂)₂-,

   -(CH₂)₂-Si(CH₃)₂-(CH₂)₂-,

   -CH₂-,

   - (CH₂)₂-,

   -(CH₂)₃-,

   -(CH₂)₄-,

   - (CH₂)₅-,

   -(CH₂)₆-,

   -CF₂-CH₂-,

   -CF₂-(CH₂)₂-,

   -CF₂-(CH₂)₃-,

   -CF₂-(CH₂)₄-,

   -CF₂-(CH₂)₅-,

   -CF₂-(CH₂)₆-,

   -CO-,

   -CONH-,

   -CONH-CH₂-,

   -CONH-(CH₂)₂-,

   -CONH-(CH₂)₃-,

   -CONH-(CH₂)₆-,

   -CF₂CONHCH₂-,

   -CF₂CONH(CH₂)₂-,

   -CF₂CONH(CH₂)₃-,

   -CF₂CONH(CH₂)₆-,

   -CON(CH₃)-(CH₂)₃-,

   -CON(Ph)-(CH₂)₃-

   (wherein Ph means phenyl),

   -CON(CH₃)-(CH₂)₆-,

   -CON(Ph)-(CH₂)₆-

   (wherein Ph means phenyl),

   -CF₂-CON(CH₃)-(CH₂)₃-,

   -CF₂-CON(Ph)-(CH₂)₃-

   (wherein Ph means phenyl),

   -CF₂-CON(CH₃)-(CH₂)₆-,

   -CF₂-CON(Ph)-(CH₂)₆-

   (wherein Ph means phenyl),

   -CONH-(CH₂)₂NH(CH₂)₃-,

   -CONH-(CH₂)₆NH(CH₂)₃-,

   -CH₂O-CONH-(CH₂)₃-,

   -CH₂O-CONH-(CH₂)₆-,

   -S-(CH₂)₃-,

   -(CH₂)₂S(CH₂)₃-,

   -CONH-(CH₂)₃Si(CH₃)₂OSi(CH₃)₂(CH₂)₂-,

   -CONH-(CH₂)₃Si(CH₃)₂OSi(CH₃)₂OSi(CH₃)₂(CH₂)₂-,

   -CONH-(CH₂)₃Si(CH₃)₂O(Si(CH₃)₂O)₂Si(CH₃)₂(CH₂)₂-,

   -CONH-(CH₂)₃Si(CH₃)₂O(Si(CH₃)₂O)₃Si(CH₃)₂(CH₂)₂-,

   -CONH-(CH₂)₃Si(CH₃)₂O(Si(CH₃)₂O)₁₀Si(CH₃)₂(CH₂)₂-,

   -CONH-(CH₂)₃Si(CH₃)₂O(Si(CH₃)₂O)₂₀Si(CH₃)₂(CH₂)₂-,

   -C(O)O-(CH₂)₃-,

   -C(O)O-(CH₂)₆-,

   -CH₂-O-(CH₂)₃-Si(CH₃)₂-(CH₂)₂-Si(CH₃)₂-(CH₂)₂-,

   -CH₂-O-(CH₂)₃-Si(CH₃)₂-(CH₂)₂-Si(CH₃)₂-CH(CH₃)-,

   -CH₂-O-(CH₂)₃-Si(CH₃)₂-(CH₂)₂-Si(CH₃)₂-(CH₂)₃-,

   -CH₂-O-(CH₂)₃-Si(CH₃)₂-(CH₂)₂-Si(CH₃)₂-CH(CH₃)-CH₂-,

   -OCH₂-,

   -O(CH₂)₃-,

   -OCFHCF₂-

   , and

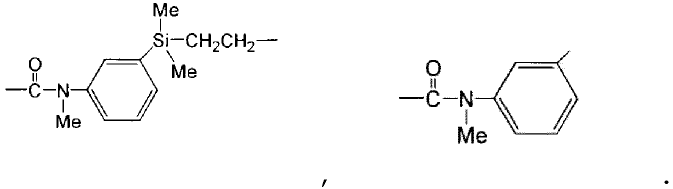

In yet another embodiment, X^{A} is each independently a group of the formula -(R¹⁶)ₓ₁-(CFR¹⁷)_{y1}-(CH₂)_{z1}-. In the formula, x1, y1 and z1 are each independently an integer of 0-10, the sum of x1, y1 and z1 is 1 or more, and the order of the repeating units in parentheses is not limited.

In the above formulae, R¹⁶ is each independently at each occurrence an oxygen atom, phenylene, carbazolylene, - NR¹⁸- (wherein R¹⁸ is H or an organic group) or a divalent organic group. Preferably, R¹⁸ is an oxygen atom or a divalent polar group.

Examples of the "divalent polar group" include, but are not limited to, -C(O)-, -C(=NR¹⁹)- and -C(O)NR¹⁹-(wherein R¹⁹ is H or lower alkyl). The "lower alkyl " is, for example, C₁₋₆-alkyl, such as methyl, ethyl or n-propyl, and these may be substituted with one or more F.

In the above formulae, R¹⁷ is each independently H, F or lower fluoroalkyl, and preferably F. The "lower fluoroalkyl " is, for example, a C₁₋₆-fluoroalkyl and preferably 1-3 carbon atoms, preferably C₁₋₃-perfluoroalkyl, more preferably trifluoromethyl or pentafluoroethyl, and further preferably trifluoromethyl.

In still another embodiment, examples of the X^{A} group include the following group: 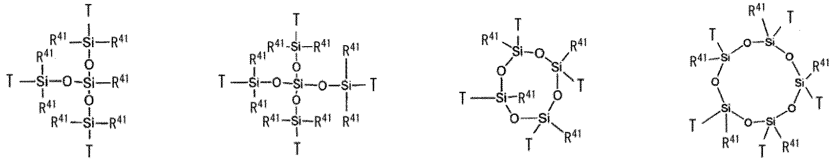 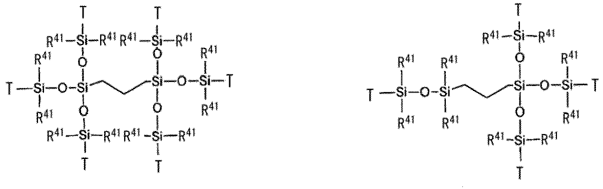 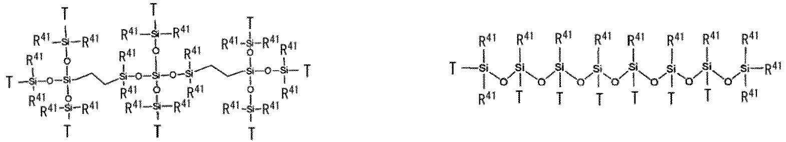 wherein
R⁴¹ each independently is H, phenyl, C₁₋₆-alkyl or a C₁₋₆-alkoxy, and preferably methyl;
in each group X¹⁰¹, some of the groups represented by T are the following groups bonded to R^{F1} or R^{F2} of the molecular backbone:

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-, and

   -CON(Ph)-(CH₂)₃-

   (wherein Ph stands for phenyl) or
a group represented by: 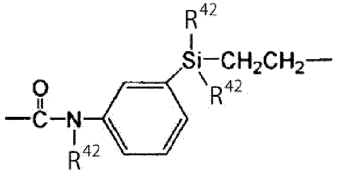
wherein R⁴² each independently is H, C₁₋₆-alkyl or C₁₋₆-alkoxy, preferably methyl or methoxy, and more preferably methyl,
some other of the Ts binds to R^{Si} of the molecular backbone, and the remaining of the Ts, if present, is independently methyl, phenyl, C₁₋₆-alkoxy, or a radical scavenging group or an UV absorbing group.

The radical scavenging group is not limited as long as it can capture a radical generated by light irradiation, and, for example, residues of a benzophenone, a benzotriazole, a benzoate, a phenyl salicylate, crotonic acid, a malonate, an organo-acrylate, a hindered amine, a hindered phenol or a triazine, is mentioned.

The UV absorbing group is not limited as long as it can absorb ultraviolet rays, and, for example, a residue of a benzotriazole, a hydroxybenzophenone, an ester of a substituted and unsubstituted benzoic acid or salicylic acid compound, an acrylate or an alkoxy cinnamate, an oxamide, an oxanilide, a benzoxazinone or a benzoxazole, is mentioned.

In a preferable embodiment, as a preferable radical scavenging group or UV absorbing group, the groups of the following formulae are mentioned.

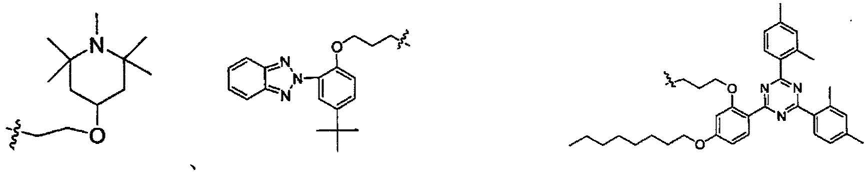

In this embodiment, X^{A} may each independently be a tri- to decavalent organic group.

In still another embodiment, examples of the X^{A} group include the following group: 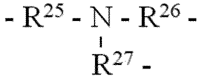
wherein R²⁵, R²⁶, and R²⁷ are each independently a di-to hexavalent organic group; and
R²⁵ binds to at least one R^{F1}, and R²⁶ and R²⁷ each bind to at least one R^{Si}.

In one embodiment, R²⁵ is a single bond, C₁₋₂₀-alkylene, C₃₋₂₀-cycloalkylene, C₅₋₂₀-arylene, -R⁵⁷-X⁵⁸-R⁵⁹-, -X⁵⁸-R⁵⁹-, or -R⁵⁷-X⁵⁸-. R⁵⁷ and R⁵⁹ are each independently a single bond, C₁₋₂₀-alkylene, C₃₋₂₀-cycloalkylene, or C₅₋₂₀-arylene. X⁵⁸ is -O-, -S-, -CO-, -O-CO-, or -COO-.

In one embodiment, R²⁶ and R²⁷ are each independently a hydrocarbon or a group having at least one atom selected from N, O and S at the end or in the backbone of a hydrocarbon, preferably including C₁₋₆-alkyl, -R³⁶-R³⁷-R³⁶-, or -R³⁶-CHR³⁸₂-. Here, R³⁶ is each independently a single bond or C₁₋₆-alkyl, preferably C₁₋₆-alkyl. R³⁷ is N, O or S, preferably N or O. R³⁸ is -R⁴⁵-R⁴⁶-R⁴⁵-, -R⁴⁶-R⁴⁵- or -R⁴⁵-R⁴⁶-. R⁴⁵ is each independently C₁₋₆-alkyl. R⁴⁶ is N, O or S, preferably O.

In this embodiment, X^{A} may each independently be a tri- to decavalent organic group.

The fluoropolyether group-containing compound of formula (1) (also "compound (1)" hereinafter) or (2) (also "compound (2)" hereinafter) is not particularly limited, but may have an average molecular weight of 5 × 10² to 1 × 10⁵. In particular, the compound preferably has a number average molecular weight of 2,000-32,000, and more preferably 2,500-12,000, from the viewpoint of friction durability. The "average molecular weight" refers to a number average molecular weight, and the "average molecular weight" is a value obtained by ¹⁹F-NMR measurement.

In one embodiment, the fluorine-containing silane compound in the surface-treating agent used in the present disclosure is the compound (1), in another embodiment it is the compound (2), and in another embodiment it is the compound (1) and the compound (2).

In the surface-treating agent used in the present disclosure, the compound (2) is preferably 0.1-35 mol% based on the total of the compounds (1) and (2). The lower limit of the content of the compound (2) based on the total of the compounds (1) and (2)may be preferably 0.1 mol%, more preferably 0.2 mol%, further preferably 0.5 mol%, and still more preferably 1 mol%, particularly preferably 2 mol%, and especially 5 mol%. The upper limit of the content of the compound (2) based on the total of the compounds (1) and (2) may be preferably 35 mol%, more preferably 30 mol%, further preferably 20 mol%, and still more preferably 15 mol% or 10 mol%. The amount of compound (2) based on the total of the compounds (1) and (2) is preferably 0.1-30 mol%, more preferably 0.1-20 mol%, further preferably 0.2-10 mol%, still more preferably 0.5-10 mol%, and particularly preferably 1-10 mol%, for example, 2-10 mol%, or 5-10 mol%. With the compound (2) being within such a range, friction durability can be more increased.

The compounds (1) or (2) can be obtained, for example, by the methods described in e.g. JP-A-2014-218639 and JP-A-2017-082194.

The surface-treating agent used in the present disclosure may include a solvent, a (unreactive) fluoropolyether compound which can be understood as a fluorine-containing oil, preferably a perfluoro(poly)ether compound (hereinafter, collectively referred to as "fluorine-containing oil"), a (unreactive) silicone compound which can be understood as a silicone oil (hereinafter, referred to as "silicone oil"), a catalyst, a surfactant, a polymerization inhibitor, a sensitizer, and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

The fluorine-containing oil is not limited, and examples thereof include a compound (perfluoro(poly)ether compound) of formula (3):

Rf⁵-(OC₄F₈)_{a'}-(OC₃F₆)_{b'}-(OC₂F₄)_{c'}-(OCF₂)_{d'}-Rf⁶ ... (3)

wherein Rf⁵ is C₁₋₁₆-alkyl optionally substituted with one or more F (preferably, C₁₋₁₆-perfluoroalkyl), Rf⁶ is H, F, or C₁₋₁₆-alkyl optionally substituted with one or more F (preferably, C₁₋₁₆-perfluoroalkyl), and Rf⁵ and Rf⁶ are each independently, more preferably, C₁₋₃-perfluoroalkyl; and
a', b', c' and d' represent the respective four numbers of repeating units in perfluoro(poly)ether constituting a main backbone of the polymer and are mutually independently an integer of 0-300, (a'+b'+c'+d') is at least 1, preferably 1-300, more preferably 20-300, the order of the repeating units in parentheses provided with a subscript a', b', c' or d' is not limited, and, among such repeating units, for example, -(OC₄F₈)- may be any of -(OCF₂CF₂CF₂CF₂)-, -(OCF(CF₃)CF₂CF₂)-, - (OCF₂CF(CF₃)CF₂)-, -(OCF₂CF₂CF(CF₃))-, -(OC(CF₃)₂CF₂)-, - (OCF₂C(CF₃)₂)-, -(OCF(CF₃)CF(CF₃))-, -(OCF(C₂F₅)CF₂)- and - (OCF₂CF(C₂F₅))- and is preferably -(OCF₂CF₂CF₂CF₂)-, -(OC₃F₆)-may be any of -(OCF₂CF₂CF₂)-, - (OCF (CF₃)CF₂)- and - (OCF₂CF(CF₃))- and is preferably -(OCF₂CF₂CF₂)-, and - (OC₂F₄)- may be any of -(OCF₂CF₂)- and - (OCF (CF₃))- and is preferably -(OCF₂CF₂)-.

Examples of the perfluoro(poly)ether compound of formula (3) include a compound of any of the formulae (3a) and (3b) (which may be adopted singly or as a mixture of two or more kinds thereof).

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (3b)

In such formulae, Rf⁵ and Rf⁶ are as described above; in formula (3a), b" is an integer of 1-100; and, in formula (3b), a" and b" are each independently an integer of 0-30, c" and d" are each independently an integer of 1-300. The order of the repeating units in parentheses provided with a subscript a", b", c", or d" is not limited.

From another viewpoint, the fluorine-containing oil may be a compound of the formula Rf³-F wherein Rf³ is C₅₋₁₆-perfluoroalkyl. The fluorine-containing oil may be a chlorotrifluoroethylene oligomer.

The fluorine-containing oil may have an average molecular weight of 500-10,000. The molecular weight of the fluorine-containing oil may be measured using GPC.

The fluorine-containing oil may be contained in an amount of, for example, 0-50 mass%, preferably 0-30 mass%, and more preferably 0-5 mass% based on the surface-treating agent. In one embodiment, the surface-treating agent is substantially free of the fluorine-containing oil. Being substantially free of the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluorine-containing silane compound. With such average molecular weights, better friction durability and surface lubricity can be obtained, in the case of forming the surface-treating layer by the vacuum deposition method.

In one embodiment, the average molecular weight of the fluorine-containing oil may be smaller than the average molecular weight of the fluorine-containing silane compound. With such average molecular weights, a cured product having high friction durability and high surface lubricity can be formed while suppressing the deterioration in transparency of the surface-treating layer obtained from the compound.

The fluorine-containing oil contributes to enhancing surface lubricity of the layer formed by the surface-treating agent.

For example, the silicone oil may be linear or cyclic silicone oil having 2,000 or less siloxane bonds. The linear silicone oil may be so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying straight silicone oil with alkyl, aralkyl, polyether, higher fatty acid ester, fluoroalkyl, amino, epoxy, carboxyl, or alcohol. Examples of the cyclic silicone oil include cyclic dimethylsiloxane oil.

The surface-treating agent can include, for example, 0-300 parts by mass (pbm), preferably 50-200 pbm of such silicone oil based on a total of 100 pbm of the fluorine-containing silane compound (in the case of two or more kinds, the total thereof, much the same is true on the following).

Silicone oil contributes to increasing the surface lubricity of the surface-treating layer.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydration condensation of the fluorine-containing silane compound, and promotes formation of the layer to be formed by the surface-treating agent.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The present surface-treating agent can be formed into a pellet by impregnating a porous material, for example, a porous ceramic material or a metal fiber for example that obtained by solidifying a steel wool, therewith. Such pellets can be used in, for example, vacuum deposition.

The thickness of the surface-treating layer is not limited. The thickness of the layer in the case of an optical member is in the range of 1-50 nm, 1-30 nm, and preferably 1-15 nm, from the viewpoint of optical performance, surface lubricity, friction durability, and antifouling properties.

The surface-treating layer can be formed, for example, by forming a layer of the surface-treating agent on the intermediate layer and post-treating the layer as necessary.

The layer of the surface-treating agent can be formed by applying the above surface-treating agent on the surface of the intermediate layer such that the composition coats the surface. The coating method is not limited. For example, a wet coating method and a dry coating method can be used.

Examples of the wet coating method include dip coating, spin coating, flow coating, spray coating, roll coating, and gravure coating.

Examples of the dry coating method include deposition (usually, vacuum deposition), sputtering, and CVD. Specific examples of the deposition method (usually, a vacuum deposition method) include resistive heating, highfrequency heating using electron beam, and microwave, and ion beam. Specific examples of the CVD method include plasma-CVD, optical CVD, and thermal CVD.

Furthermore, coating by an atmospheric pressure plasma method can be performed.

When using the wet coating method, the surface-treating agent can be applied to the intermediate layer after being diluted with a solvent. From the viewpoint of the stability of the surface-treating agent and the volatility of solvents, the following solvents are preferably used: perfluoroaliphatic C₅₋₁₂-hydrocarbons (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd., and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent may be directly subjected to the dry coating method, or may be diluted with the above solvent before being subjected to the dry coating method.

A layer of the surface-treating agent is preferably formed such that the surface-treating agent coexists in the layer with a catalyst for hydrolysis and dehydrative condensation. Conveniently, in the case of a wet coating method, the surface-treating agent is diluted with a solvent, and then, immediately before application to the intermediate layer, a catalyst may be added to the diluted solution of the surface-treating agent. In the case of a dry coating method, the surface-treating agent to which a catalyst has been added is directly used to a deposition (usually vacuum deposition) treatment, or a pellet-like material may be used to a deposition (usually vacuum deposition) treatment, wherein the pellets is obtained by impregnating a porous body of metal such as iron or copper with the surface-treating agent to which the catalyst has been added.

The catalyst may be any suitable acid or base. The acid catalyst may be, for example, acetic acid, formic acid, or trifluoroacetic acid. The base catalyst may be, for example, ammonia or organic amine.

In the above-described manner, a layer derived from the surface-treating agent is formed on the intermediate layer surface, and the article of the present disclosure is produced. The surface-treating layer thus obtained has high friction durability. The layer may have not only high friction durability but also have, depending on the compositional features of the surface-treating agent used, water-repellency, oil-repellency, antifouling properties (e.g., preventing grime such as fingerprints from adhering), waterproof properties (e.g. preventing water from entering electronic components), surface lubricity (or lubricity, for example, such as removability by wiping of grim such as fingerprints, and excellent tactile sensations to the fingers, and may be suitably used as a functional thin film.

The present article may be an optical material having the surface-treating layer as an outermost layer.

The present article may be, but is not limited to, an optical member. Examples of the optical member include lenses of glasses; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The present article may be medical equipment or a medical material.

The present article has high chemical resistance and high friction durability by having an intermediate layer containing a composite oxide containing Si on a substrate and a surface-treating layer formed from a surface-treating agent containing a fluorine-containing silane compound thereon.

The present article can be obtained by forming an intermediate layer containing a composite oxide containing Si on a substrate and forming a surface-treating layer from a surface-treating agent containing a fluorine-containing silane compound thereon.

Typically, the present article can be produced by simultaneously depositing Si and another atom on the substrate.

Accordingly, the present method is a method for producing an article comprising a substrate and, formed thereon, a surface-treating layer formed from a surface-treating agent containing at least one fluorine-containing silane compound of formula (1) or (2) as defined herein, comprising:
- simultaneously depositing Si and Ta or Si and Nb on the substrate to form an intermediate layer containing a composite oxide of Si and Ta or of Si and Nb; and
- forming a surface-treating layer directly on the intermediate layer.

The present article may be produced by sequentially depositing Si and another atoms on the substrate.

### Examples

Hereinafter, an article of the present disclosure will be described in Examples. In the Examples, all chemical formulae shown below indicate average compositional features, and the order of repeating units (such as (CF₂CF₂CF₂O), (CF (CF₃)CF₂O), (CF₂CF₂O), and (CF₂O)) constituting perfluoropolyether is not limited.

As the glass substrate, Gorilla Glass 3 (manufactured by Corning Inc.) which had been subjected to chemical strengthening and surface polishing with a thickness of 0.5 mm, 71.5 mm x 149.0 mm was used, and after forming an intermediate layer, a surface-treating layer was formed on the intermediate layer to obtain a glass substrate with a surface-treating layer. Details are as follows.

### (Formation of intermediate layer)

The intermediate layer was formed by placing a silicon target and a tantalum target or a niobium target in an RAS or DC-sputtering apparatus, setting sputtering conditions for each example while introducing a mixed gas of argon and oxygen into the chamber, and forming intermediate layers made of composite oxides of silicon and tantalum or niobium in a thickness of 10-40 nm at various film formation rate ratios (Si/Ta).

The formation of the surface-treating layer was conducted using an apparatus capable of performing resistance heating vapor deposition. Specifically, a composition containing a fluorine-containing organosilicon compound was introduced into a heating vessel, the vessel was evacuated with a vacuum pump to distill off the solvent, and the heating vessel was heated to form a surface-treating layer on the intermediate layer. As the fluorine-containing organosilicon compound, compounds having the following structure were used.

### Compound A

CF₃O(CF₂CF₂O)₁₅(CF₂O)₁₆CF₂CH₂OCH₂CH₂CH₂Si[CH₂CH₂CH₂Si(OCH₃)₃ ]₃

### Compound B

CF₃CF₂CF₂O(CF₂CF₂CF₂O)₂₅CF₂CF₂(CH₂CH[Si (OCH₃)₃])₃H

### Compound C

CF₃CF₂CF₂O(CF₂CF₂CF₂O)₂₃CF₂CF₂CONHCH₂CH₂CH₂Si(OCH₃)₃

### Compound D

CF₃CF₂CF₂O(CF₂CF₂CF₂O)₂₃CF₂CF₂CONHCH₂C[CH₂CH₂CH₂Si(OCH₃)₃]₃

### Compound E

[(CH₃O)₃SiCH₂CH₂CH₂]₃CCH₂NHCOCF₂O(CF₂CF₂O)₁₀(CF₂O)₁₀CF₂CONH CH₂C[CH₂CH₂CH₂Si(OCH₃)₃]₃

### Compound F

[(CH₃O)₃SiCH₂CH₂CH₂]₃CCH₂NHCOCF₂O(CF₂CF₂O)₈(CF₂O)₁₄CF₂CONHC H₂C[CH₂CH₂CH₂Si(OCH₃)₃]₃

### Compound G

[(CH₃O)₃SiCH₂CH₂CH₂]₃CCH₂NHCOCF₂CF₂O(CF₂CF₂CF₂O)₁₆CF₂CF₂CON HCH₂C[CH₂CH₂CH₂Si(OCH₃)₃]₃

### Compound H

CF₃CF₂CF₂O[CF(CF₃)CF₂O]₂₂CFCONHCH₂C[CH₂CH₂CH₂Si(OCH₃)₃]₃

**[Table 1]**

| | Film formation method | Vapor deposition material 1 | Vapor deposition material 2 | Film thickness of Intermediate layer | Film formation rate (Si/Ta) | Compound |
|---|---|---|---|---|---|---|
| Example 1 | RAS | Si | Ta | 40 nm | 8/2 | A |
| Example 2 | RAS | Si | Ta | 40 nm | 5/5 | A |
| Example 3 | DC | Si | Ta | 40 nm | 8/2 | A |
| Example 4 | DC | Si | Ta | 40 nm | 5/5 | A |
| Example 5 | DC | Si | Ta | 40 nm | 9/1 | A |
| Example 6 | DC | Si | Ta | 40 nm | 95/5 | A |
| Example 7 | DC | Si | Ta | 40 nm | 1/9 | A |
| Example 8 | DC | Si | Ta | 20 nm | 8/2 | A |
| Example 9 | DC | Si | Ta | 10 nm | 8/2 | A |
| Example 10 | DC | Si | Nb | 40 nm | 8/2 | A |
| Example 11 | DC | Si | Ta | 40 nm | 8/2 | B |
| Example 12 | DC | Si | Ta | 40 nm | 8/2 | C |
| Example 13 | DC | Si | Ta | 40 nm | 8/2 | D |
| Example 14 | DC | Si | Ta | 40 nm | 8/2 | E |
| Example 15 | DC | Si | Ta | 40 nm | 8/2 | F |
| Example 16 | DC | Si | Ta | 40 nm | 8/2 | G |
| Example 17 | DC | Si | Ta | 40 nm | 8/2 | H |
| CE 1 | RAS | Si | - | 40 nm | - | A |
| CE 2 | DC | Si | - | 40 nm | - | A |
| CE 3 | DC | Si | - | 10 nm | - | A |
| CE 4 | DC | Si | - | 40 nm | - | B |
| CE 5 | DC | Si | - | 40 nm | - | C |
| CE 6 | DC | Si | - | 40 nm | - | D |
| CE 7 | DC | Si | - | 40 nm | - | E |
| CE 8 | DC | Si | - | 40 nm | - | F |
| CE 9 | DC | Si | - | 40 nm | - | G |
| CE 10 | DC | Si | - | 40 nm | - | H |

| | | | | | | |
|---|---|---|---|---|---|---|
| CE = Comparative Example | | | | | | |

### <Evaluation>

The glass substrate with the surface-treating layer obtained above was each subjected to measurement of the water contact angle, alkali test, and evaluation of friction durability as follows.

### (Alkali immersion test)

PTFE O-rings 1 cm in diameter were placed on the surfaces of the substrates surface-treated in Examples 3, 4, 7, 10-13, and 17 and Comparative Examples 1, 4-6, and 10, and 8N NaOH solutions (aqueous alkali solutions) were dropped into the O-rings, the surfaces of the surface-treating layers were brought into contact with the aqueous alkali solutions, and alkali immersion tests were performed. After 20-360 minutes of the alkali immersion test, the aqueous alkali solution was wiped off and washed with pure water and ethanol, and then the contact angle with water was measured. The static contact angles of water were measured by dropping 2 µL of a water droplet of pure water on the surfaces of the glass substrates after the alkali immersion test and using a contact-angle meter (automatic contact-angle meter DropMaster701 manufactured by Kyowa Interface Science Co., Ltd.). The static contact angle of water after the alkali immersion test was measured at five points. When the measured value of the static contact angle of water was lowered within 360 minutes, the alkali immersion test was stopped on the way. The relationship between the immersion time and the average value of the contact angles at five points is shown in Table 2 below (wherein CE = Comparative Example).

**[Table 2]**

| | Static contact angle of water for alkali immersion test (°) | | | | | | | | | | | |
|---|---|---|---|---|---|---|---|---|---|---|---|---|
| Time (min) | 0 | 20 | 40 | 60 | 90 | 105 | 120 | 150 | 180 | 240 | 300 | 360 |
| Example 3 | 115 | 115 | 114 | 113 | 113 | 111 | 110 | 110 | 110 | 92 | 40 | - |
| Example 4 | 116 | 116 | 115 | 115 | 114 | 114 | 114 | 114 | 114 | 113 | 113 | 113 |
| Example 7 | 115 | 114 | 115 | 113 | 114 | 114 | 113 | 114 | 114 | 114 | 113 | 112 |
| Example 10 | 112 | 111 | 112 | 112 | 110 | 111 | 71 | 54 | 53 | - | - | - |
| Example 11 | 113 | 112 | 111 | 111 | 110 | 111 | 112 | 57 | 52 | - | - | - |
| Example 12 | 112 | 112 | 112 | 113 | 111 | 112 | 110 | 88 | 51 | 52 | - | - |
| Example 13 | 114 | 112 | 113 | 112 | 111 | 112 | 110 | 109 | 109 | 110 | 111 | 112 |
| Example 17 | 112 | 112 | 111 | 112 | 113 | 108 | 55 | 53 | - | - | - | - |
| CE 1 | 116 | 114 | 110 | 110 | 96 | 37 | 27 | - | - | - | - | - |
| CE 4 | 113 | 82 | 52 | 49 | 46 | - | - | - | - | - | - | - |
| CE 5 | 112 | 82 | 52 | 49 | 49 | - | - | - | - | - | - | - |
| CE 6 | 113 | 111 | 110 | 61 | 53 | - | - | - | - | - | - | - |
| CE 10 | 112 | 102 | 64 | 62 | 52 | - | - | - | - | - | - | - |

### (Friction durability test)

The sample article on which the surface-treating layer was formed was horizontally disposed, the following friction element was brought into contact with the surface-treating layer (the contact surface was a circle having a 1 cm diameter), a 5N load was applied thereon, and then the friction block was reciprocated at a speed of 40 mm/sec in a state in which the load was applied. The friction block was reciprocated up to 3000 times for Examples 1 and 2 and Comparative Example 1, or up to 10,000 times for Examples 3-6, 8-9, and 11-17, and Comparative Examples 2-10, and the static contact angle (°) of water was measured for each reciprocation frequency (friction frequency) of 500 or 1,000 times. The test was stopped when the measured value of the static contact angle of water was less than 60°. The static contact angle of water was measured in the same manner as in the alkali test. The results are shown in Table 3 below for Examples 1 and 2 and Comparative Example 1 using RAS, in Table 4 below for Examples 3-6, 8-9 and 11-17 using DC, and in Table 5 below for Comparative Examples 2-10.

### - Friction block

The surfaces (1 cm diameter) of the silicone rubber processed products shown below were covered with cotton soaked in artificial sweat having the compositional features shown below, and the products were used as friction blocks.

Compositional feature of artificial sweat:
Anhydrous disodium hydrogen phosphate: 2g
Sodium chloride: 20 g
85% Lactic acid: 2 g
Histidine hydrochloride: 5 g
Distilled water: 1 kg
Silicone rubber processed product:
   Silicone rubber stopper SR-51 made of Tiger's polymer processed into a cylindrical shape having a diameter of 1 cm and a thickness of 1 cm.

**[Table 3]**

| Friction frequency (times) | Static contact angle (°) | | |
|---|---|---|---|
| | Example 1 | Example 2 | Comparative Example 1 |
| 0 | 117 | 117 | 115 |
| 500 | 103 | 102 | 96 |
| 1000 | 89 | 87 | 76 |
| 1500 | 81 | 71 | 58 |
| 2000 | 72 | 54 | 40 |
| 2500 | 66 | 48 | - |
| 3000 | 59 | 42 | - |

**[Table 4]**

| Friction frequency (times) | Static contact angle (°) | | | | | | | | | | | | |
|---|---|---|---|---|---|---|---|---|---|---|---|---|---|
| | Example number | | | | | | | | | | | | |
| | 3 | 4 | 5 | 6 | 8 | 9 | 11 | 12 | 13 | 14 | 15 | 16 | 17 |
| 0 | 115 | 114 | 113 | 114 | 115 | 114 | 113 | 114 | 113 | 109 | 109 | 109 | 110 |
| 1000 | 105 | 94 | 109 | 107 | 103 | 109 | 105 | 90 | 109 | 99 | 97 | 105 | 91 |
| 2000 | 99 | 80 | 106 | 104 | 100 | 101 | 98 | 78 | 105 | 88 | 89 | 99 | 78 |
| 3000 | 95 | 75 | 105 | 102 | 95 | 97 | 89 | 65 | 99 | 81 | 83 | 94 | 63 |
| 4000 | 90 | 70 | 103 | 100 | 92 | 94 | 83 | 52 | 96 | 74 | 78 | 89 | 51 |
| 5000 | 88 | 63 | 101 | 96 | 90 | 91 | 77 | - | 91 | 71 | 74 | 85 | - |
| 6000 | 85 | 57 | 99 | 92 | 87 | 88 | 71 | - | 87 | 65 | 67 | 79 | - |
| 7000 | 83 | - | 95 | 90 | 85 | 87 | 64 | - | 83 | 55 | 58 | 73 | - |
| 8000 | 81 | - | 93 | 88 | 83 | 85 | 56 | - | 79 | 50 | 53 | 68 | - |
| 9000 | 79 | - | 87 | 82 | 80 | 81 | - | - | 75 | - | - | 60 | - |
| 10000 | 77 | - | 83 | 78 | 78 | 79 | - | - | 70 | - | - | 54 | - |

**[Table 5]**

| Friction number of times (times) | Static contact angle (°) | | | | | | | | |
|---|---|---|---|---|---|---|---|---|---|
| | Comparative Example number | | | | | | | | |
| | 2 | 3 | 4 | 5 | 6 | 7 | 8 | 9 | 10 |
| 0 | 115 | 115 | 114 | 114 | 114 | 108 | 109 | 109 | 110 |
| 1000 | 106 | 103 | 93 | 72 | 103 | 81 | 85 | 100 | 65 |
| 2000 | 90 | 92 | 81 | 52 | 94 | 66 | 69 | 91 | 38 |
| 3000 | 78 | 78 | 66 | - | 83 | 53 | 54 | 85 | - |
| 4000 | 68 | 69 | 51 | - | 77 | - | - | 74 | - |
| 5000 | 60 | 62 | - | - | 66 | - | - | 63 | - |
| 6000 | 51 | 53 | - | - | 60 | - | - | 54 | - |
| 7000 | - | 55 | - | - | 53 | - | - | - | - |

### (Surface analysis)

The compositional feature of the treated surfaces of the above treated glass substrates (analyzed in the depth direction) was analyzed using an X-ray photoelectron spectrometer (XPS, PHI 5000 VersaProbe II manufactured by ULVAC-PHI, Inc.). The measurement conditions for XPS analysis were as follows.
X-ray source : monochromatic AlKα radiation (25 W)
Photoelectron detection area: 1400 µm × 300 µm
Photoelectron detection angles: 20°, 45°, 90°
Path energy : 23.5 eV

For the glass substrates with the surface-treating layer of Examples 1 and 2, the peak areas of C1s, O1s, F1s, Si2p, and Ta4f orbitals were observed by XPS, and the atomic ratios and area ratios of carbon, oxygen, fluorine, silicon, and tantalum were calculated to obtain the compositional features of the treated surface including the surface-treating antifouling layer. The results are shown in Table 6 below for Examples 1 and 2 using RAS.

**[Table 6]**

| | Photoelectron detection angle | | | | | | Si/Ta |
|---|---|---|---|---|---|---|---|
| | | C1s | O1s | F1s | Si2p | Ta4f | |
| Example 1 | 20deg | 26.79 | 17.9 | 54.75 | 0.51 | 0.05 | 10.20 |
| | 45deg | 25.63 | 19.75 | 51.53 | 2.59 | 0.5 | 5.18 |
| | 90deg | 23.38 | 23.38 | 47.87 | 4.39 | 0.98 | 4.48 |
| Example 2 | 20deg | 26.53 | 17.42 | 55.25 | 0.5 | 0.3 | 1.67 |
| | 45deg | 24.99 | 20.71 | 51.24 | 1.92 | 1.14 | 1.68 |
| | 90deg | 23.35 | 23.48 | 48.16 | 2.93 | 2.09 | 1.40 |

### (Surface analysis)

The compositional feature of the treated surfaces of the above treated glass substrates (analyzed in the depth direction) was analyzed using an X-ray photoelectron spectrometer (XPS, PHI 5000 VersaProbe II manufactured by ULVAC-PHI, Inc.). The measurement conditions for XPS analysis were as follows.
X-ray source : monochromatic AlKα radiation (25 W)
Photoelectron detection area: 1400 µm × 300 µm
Photoelectron detection angle: 45°
Path energy : 23.5 eV
Sputter ion : Ar ion

For the glass substrate with the surface-treating layer of Examples 1-7, the layers (the surface-treating layer and the intermediate layer) on the substrate were etched gradually in the depth direction by sputtering with Ar ions for a predetermined time, and after each predetermined time, the peak areas of the O1s, Si2p, and Ta4f orbitals were observed by XPS, and the atomic ratio and the area ratio of oxygen and silicon were calculated to obtain the compositional features of the layer on the substrate surface. The etching rate in the sputtering was set to 3 nm/min. The results of Examples 1-7 are shown in Table 7 below.

**[Table 7]**

| | | | sputter time[min] | | | | | | | | |
|---|---|---|---|---|---|---|---|---|---|---|---|
| | | | 0 | 1 | 2 | 3 | 4 | 5 | 7 | 9 | 11 |
| Example 1 | Element concentration (%) | O1s | 19.67 | 66.28 | 66.47 | 65.03 | 65.2 | 65.97 | 65.24 | 65.38 | 66.48 |
| | | Si2p | 2.61 | 25.38 | 25.63 | 25.78 | 25.37 | 24.68 | 25.06 | 24.99 | 25.72 |
| | | Ta4f | 0.47 | 8.34 | 8.9 | 9.18 | 9.43 | 9.36 | 9.7 | 9.63 | 8.82 |
| | | Si/Ta | 5.55 | 3.04 | 2.88 | 2.81 | 2.69 | 2.64 | 2.58 | 2.60 | 2.92 |
| Example 2 | Element concentration (%) | O1s | 19.08 | 66.63 | 66.09 | 64.02 | 63.91 | 63.31 | 63.3 | 63.8 | 65 |
| | | Si2p | 1.67 | 15.71 | 14.67 | 1534 | 15.56 | 15.57 | 15.5 | 15.55 | 14.98 |
| | | Ta4f | 1.07 | 17.66 | 20.25 | 20.64 | 20.53 | 21.12 | 20.6 | 20.66 | 20.02 |
| | | Si/Ta | 1.56 | 0.89 | 072 | 074 | 0.76 | 0.74 | 0.75 | 0.75 | 0.75 |
| Example 3 | Element concentration (%) | O1s | 22.07 | 67.38 | 67.20 | 67.45 | 67.57 | 66.27 | 64.38 | 63.79 | 64.76 |
| | | Si2p | 3.40 | 24.35 | 24.83 | 24.61 | 23.58 | 2313 | 21.89 | 21.67 | 21.48 |
| | | Ta4f | 0.68 | 7.18 | 7.97 | 7.94 | 7.92 | 7.69 | 3.90 | 1.57 | 0.91 |
| | | Si/Ta | 5.00 | 3.39 | 3.12 | 3.10 | 2.98 | 3.01 | 5.61 | - | - |
| Example 4 | Element concentration (%) | O1s | 20.89 | 68.33 | 67.24 | 66.49 | 65.61 | 64.35 | 62.26 | 63.47 | 63.69 |
| | | Si2p | 1.89 | 15.04 | 14.88 | 15.40 | 15.93 | 15.59 | 20.27 | 21.74 | 21.83 |
| | | Ta4f | 1.17 | 16.01 | 17.48 | 18.12 | 18.47 | 18.07 | 9.49 | 2.91 | 1.30 |
| | | Si/Ta | 1.62 | 0.94 | 0.85 | 0.85 | 0.86 | 0.86 | 2.14 | - | - |
| Example 5 | Element concentration (%) | O1s | 2304 | 62.50 | 64.14 | 64.62 | 65.21 | 66.39 | 64.13 | 65.31 | 66.90 |
| | | Si2p | 3.80 | 24.60 | 24.69 | 25.04 | 24.43 | 23.05 | 24.43 | 23.86 | 24.12 |
| | | Ta4f | 0.47 | 4.81 | 5.01 | 4.96 | 4.87 | 4.66 | 4.78 | 4.89 | 4.87 |
| | | Si/Ta | 8.09 | 5.11 | 4.93 | 5.06 | 5.02 | 4.96 | 5.11 | 4.88 | 4.95 |
| Example 6 | Element concentration (%) | O1s | 24.03 | 62.50 | 63.14 | 64.62 | 62.21 | 64.38 | 63.13 | 64.31 | 64.39 |
| | | Si2p | 3.90 | 32.60 | 33.60 | 32.31 | 34.67 | 32.45 | 32.99 | 32.60 | 32.60 |
| | | Ta4f | 0.35 | 3.01 | 3.26 | 3.07 | 3.12 | 3.17 | 3.15 | 3.01 | 3.01 |
| | | Si/Ta | 11.14 | 10.83 | 10.31 | 10.52 | 11.11 | 1025 | 10.47 | 10.83 | 10.83 |
| Example 7 | Element concentration (%) | O1s | 20.30 | 64.73 | 66.32 | 66.35 | 64.97 | 65.08 | 64.71 | 65.92 | 64.40 |
| | | Si2p | 1.01 | 4.52 | 5.21 | 5.03 | 5.31 | 4.62 | 4.91 | 3.98 | 4.36 |
| | | Ta4f | 1.17 | 25.67 | 28.47 | 28.62 | 28.72 | 27.95 | 27.12 | 23.03 | 24.23 |
| | | Si/Ta | 0.88 | 0.18 | 0.18 | 0.18 | 0.18 | 0.17 | 0.18 | 0.17 | 0.18 |

From the above analysis results, it was confirmed that Examples in which the Si/Ta ratio was 0.15-12.0 (Si:Ta = (13:87)-(93:7)) had high alkali resistance and friction durability.

As understood from the above results, in Examples 1-17 in which the intermediate layer made of Si, Ta, and O or the intermediate layer made of Si, Nb, and O was formed between the substrate and the surface-treating layer, it was confirmed that a decrease in the contact angle in the alkali immersion test was suppressed and the alkali durability was excellent as compared with Comparative Examples 1-10 in which such an intermediate layer was not formed. Further, it was confirmed that in Examples 1-4, a decrease in the contact angle in the abrasion durability test was suppressed, and the friction durability using artificial sweat was excellent.

### Industrial Applicability

The article of the present disclosure can be suitably used in various applications, for example, as an optical member.

## Claims

1. An article, comprising:
- a substrate;
- an intermediate layer located on the substrate and comprising a composite oxide which (i) is a composite oxide of Si and Ta or of Si and Nb, and (ii) constitutes a homogeneous phase; and
- a surface-treating layer located directly on the intermediate layer and formed from a surface-treating agent containing at least one fluorine-containing silane compound of formula (1) or (2):
R^{F1}_{α}-X^{A}-R^{Si}β (1)
R^{Si}_{γ}-X^{A}-R^{F2}-X^{A}-R^{Si}_{γ} (2)
wherein, each independently at each occurrence,
R^{F1} is Rf¹-R^{F}-O_{q}-, wherein Rf¹ is C₁₋₁₆-alkyl optionally substituted with F, R^{F} is a divalent fluoropolyether group, and q is 0 or 1;
R^{F2} is -Rf²ₚ-R^{F}-O_{q}-, wherein R^{F} and q are as defined above, Rf² each independently is C₁₋₆-alkylene optionally substituted with F, and p is 0 or 1;
R^{Si} is a monovalent group containing a Si atom to which H, OH, a hydrolyzable group, or a monovalent organic group is bonded; and at least one R^{Si} containing a Si atom to which OH or a hydrolyzable group is bonded;
X^{A} is a single bond or a di- to decavalent organic group;
α is an integer of 1-9;
β is an integer of 1-9; and
γ each independently is an integer of 1-9.

2. The article of claim 1, wherein the molar ratio of Si to the other metal in the intermediate layer at 0.1-10 nm from the outermost surface close to the surface-treating layer is 10:90 to 99.9:0.1.

3. The article of any of claim 1 or 2, wherein the molar ratio of Si to the other metal in the composite oxide is 10:90 to 99.9:0.1, preferably 13:87 to 93:7, and more preferably 45:55 to 75:25.

4. The article of any of claims 1-3, wherein Rf¹ each independently is C₁₋₁₆-perfluoroalkyl group; and Rf² each independently is C₁₋₆-perfluoroalkylene.

5. The article of any of claims 1-4, wherein R^{F} each independently is a group of the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein R^{Fa} each independently is H, F or Cl; and a-f each independently are an integer of 0-200, with (a+b+c+d+e+f) ≥ 1, and the order of the repeating units in parentheses is not limited.

6. The article of claim 5, wherein R^{Fa} is F.

7. The article of any of claims 1-6, wherein R^{F} each independently is a group of formula (f1), (f2) or (f3):
-(OC₃F₆)_{d}- (f1)
wherein d is an integer of 1-200;
-(OC₄F₈)_{c}-(OC₃F₆)_{d}-(OC₂F₄)ₑ-(OCF₂)_{f}- (f2)
wherein c and d each independently are an integer of 0-30, e and f each independently are an integer of 1-200, and (c+d+e+f) is an integer of 10-200; and the order of the repeating units in parentheses is not limited;
-(R⁶-R⁷)_{g}- (f3)
wherein R⁶ is OCF₂ or OC₂F₄; R⁷ is OC₂F₄, OC₃F₆, OC₄F₈, OC₅F₁₀, or OC₆F₁₂, or is a combination of two or three of groups; and g is an integer of 2-100.

8. The article of any of claims 1-7, wherein R^{Si} is a group of formula (S1), (S2), (S3) or (S4): 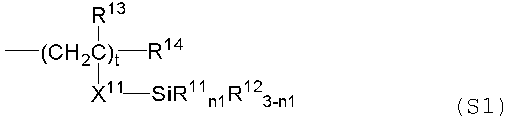
-SiR¹¹ₙ₁R¹²₃₋ₙ₁ (S2)
wherein, each independently at each occurrence,
R¹¹ is OH or a hydrolyzable group;
R¹² is H or a monovalent organic group;
R¹³ is H or a monovalent organic group;
R¹⁴ is H or halogen;
X¹¹ is a single bond or a divalent organic group;
n1 is an integer of 0-3 in each (SiR¹¹ₙ₁R¹²₃₋ₙ₁) unit; and
t is an integer of 2-10;
-SiR^{a1}ₖ₁R^{b1}ₗ₁R^{c1}ₘ₁ (S3)
wherein, each independently at each occurrence,
R^{a1} is -Z¹-SiR²¹ₚ₁R²²_{q1}R²³ᵣ₁,
Z¹ is an oxygen atom or a divalent organic group;
R²¹ is -Z^{1'}-SiR^{21'}_{p1'}R^{22'}_{q1'}R^{23'}_{r1'},
Z^{1'} is O or a divalent organic group;
R^{21'} is -Z^{1"}-SiR^{22"}_{q1"}R^{23"}_{r1"},
Z^{1"} is O or a divalent organic group;
R^{22"} is OH or a hydrolyzable group;
R^{23"} is H or a monovalent organic group;
q1" is an integer of 0-3;
r1" is an integer of 0-3;
R^{22'} is OH or a hydrolyzable group;
R^{23'} is H or a monovalent organic group;
p1' is an integer of 0-3;
q1' is an integer of 0-3;
r1' is an integer of 0-3;
R²² is OH or a hydrolyzable group;
R²³ is H or a monovalent organic group;
p1 is an integer of 0-3;
q1 is an integer of 0-3;
r1 is an integer of 0-3;
R^{b1} is OH or a hydrolyzable group;
R^{c1} is H or a monovalent organic group;
k1 is an integer of 0-3;
l1 is an integer of 0-3;
m1 is an integer of 0-3;
-CR^{d1}ₖ₂R^{e1}ₗ₂R^{f1}ₘ₂ (S4)
wherein, each independently at each occurrence,
R^{d1} is -Z²-CR³¹ₚ₂R³²_{q2}R³³ᵣ₂,
Z² is a single bond, an oxygen atom or a divalent organic group;
R³¹ is -Z^{2'}-CR^{32'}_{q2'}R^{33'}_{r2'},
Z^{2'} is a single bond, O or a divalent organic group;
R^{32'} is -Z³-SiR³⁴ₙ₂R³⁵₃₋ₙ₂;
R^{33'} is H, OH or a monovalent organic group;
q2' is an integer of 0-3;
r2' is an integer of 0-3;
R³² is -Z³-SiR³⁴ₙ₂R³⁵₃₋ₙ₂,
Z³ is a single bond, O or a divalent organic group;
R³⁴ is OH or a hydrolyzable group;
R³⁵ is H or a monovalent organic group;
n2 is an integer of 0-3;
R³³ is H, OH, or a monovalent organic group;
p2 is an integer of 0-3;
q2 is an integer of 0-3;
r2 is an integer of 0-3;
R^{e1} is a group R³² as defined above;
R^{f1} is H, OH or a monovalent organic group;
k2 is an integer of 0-3;
l2 is an integer of 0-3; and
m2 is an integer of 0-3.

9. The article of any of claims 1-8, wherein α, β and γ are 1.

10. The article of any of claims 1-9, wherein X^{A} each independently is a trivalent organic group; one of α and β is 1 and the other is 2; and γ is 2.

11. The article of any of claims 1-10, wherein the substrate is a glass substrate.

12. A method for producing an article comprising a substrate and, formed thereon, a surface-treating layer formed from a surface-treating agent containing at least one fluorine-containing silane compound of formula (1) or (2) as defined in claim 1; comprising:
- simultaneously depositing Si and Ta or Si and Nb on the substrate to form an intermediate layer containing a composite oxide of Si and Ta or of Si and Nb; and
- forming a surface-treating layer directly on the intermediate layer.

13. The use of a surface-treating agent containing at least one fluorine-containing silane compound of formula (1) or (2) as defined in any of claims 1 and 4-10 for producing the article of any of claims 1-11.

## Patentansprüche

1. Artikel, umfassend:
- ein Substrat;
- eine Zwischenschicht, die auf dem Substrat angeordnet ist und ein Mischoxid umfasst, das (i) ein Mischoxid aus Si und Ta oder aus Si und Nb ist und (ii) eine homogene Phase bildet; und
- eine Oberflächenbehandlungsschicht, die direkt auf der Zwischenschicht angeordnet ist und aus einem Oberflächenbehandlungsmittel gebildet ist, das mindestens eine fluorhaltige Silanverbindung der Formel (1) oder (2) enthält:
R^{F1}_{α}-X^{A}-R^{Si}_{β} (1)
R^{Si}_{γ}-X^{A}-R^{F2}-X^{A}-R^{Si}_{γ} (2)
worin, jeweils unabhängig voneinander bei jedem Auftreten,
R^{F1} Rf¹-R^{F}-O_{q}- ist, worin Rf¹ C₁₋₁₆-Alkyl ist, das optional mit F substituiert ist, R^{F} eine divalente Fluorpolyethergruppe ist und q 0 oder 1 ist;
RF² -Rf²ₚ-R^{F}-O_{q}- ist, worin R^{F} und q wie oben definiert sind, Rf² jeweils unabhängig voneinander C₁₋₆-Alkylen ist, das optional mit F substituiert ist, und p 0 oder 1 ist;
R^{Si} eine monovalente Gruppe ist, die ein Si-Atom enthält, an das H, OH, eine hydrolysierbare Gruppe oder eine monovalente organische Gruppe gebunden ist; und mindestens ein R^{Si} ein Si-Atom enthält, an das OH oder eine hydrolysierbare Gruppe gebunden ist;
X^{A} eine Einfachbindung oder eine di- bis dekavalente organische Gruppe ist;
α eine ganze Zahl von 1-9 ist;
β eine ganze Zahl von 1-9 ist; und
γ jeweils unabhängig voneinander eine ganze Zahl von 1-9 ist.

2. Artikel gemäß Anspruch 1, worin das Molverhältnis von Si zu dem anderen Metall in der Zwischenschicht bei 0,1-10 nm von der äußersten Oberfläche nahe der Oberflächenbehandlungsschicht 10:90 bis 99,9:0,1 beträgt.

3. Artikel gemäß einem der Ansprüche 1 oder 2, worin das Molverhältnis von Si zu dem anderen Metall in dem Mischoxid 10:90 bis 99,9:0,1, bevorzugt 13:87 bis 93:7 und bevorzugter 45:55 bis 75:25 beträgt.

4. Artikel gemäß einem der Ansprüche 1-3, worin Rf¹ jeweils unabhängig voneinander eine C₁₋₁₆-Perfluoralkylgruppe ist; und Rf² jeweils unabhängig voneinander C₁₋₆-Perfluoralkylen ist.

5. Artikel gemäß einem der Ansprüche 1-4, worin R^{F} jeweils unabhängig voneinander eine Gruppe ist mit der Formel:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
worin R^{Fa} jeweils unabhängig voneinander H, F oder Cl ist; und a-f jeweils unabhängig voneinander eine ganze Zahl von 0-200 sind, wobei (a+b+c+d+e+f) ≥ 1, und die Reihenfolge der Wiederholungseinheiten in Klammern nicht begrenzt ist.

6. Artikel gemäß Anspruch 5, worin R^{Fa} F ist.

7. Artikel gemäß einem der Ansprüche 1-6, worin R^{F} jeweils unabhängig voneinander eine Gruppe der Formel (f1), (f2) oder (f3) ist:
-(OC₃F₆)_{d}- (f1)
worin d eine ganze Zahl von 1-200 ist;
- (OC₄F₈)_{c}-(OC₃F₆)_{d}-(OC₂F₄)ₑ-(OCF₂)_{f}- (f2)
worin c und d jeweils unabhängig voneinander eine ganze Zahl von 0-30 sind, e und f jeweils unabhängig voneinander eine ganze Zahl von 1-200 sind und (c+d+e+f) eine ganze Zahl von 10-200 ist; und die Reihenfolge der Wiederholungseinheiten in Klammern nicht begrenzt ist;
-(R⁶-R⁷)_{g}- (f3)
worin R⁶ OCF₂ oder OC₂F₄ ist; R⁷ OC₂F₄, OC₃F₆, OC₄F₈, OC₅F₁₀ oder OC₆F₁₂ oder eine Kombination von zwei oder drei der Gruppen ist; und g eine ganze Zahl von 2-100 ist.

8. Artikel gemäß einem der Ansprüche 1-7, worin R^{Si} eine Gruppe der Formel (S1), (S2), (S3) oder (S4) ist: 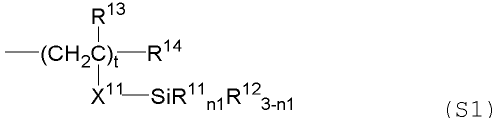
-SiR¹¹ₙ₁R¹²₃₋ₙ₁ (S2)
worin, jeweils unabhängig voneinander bei jedem Auftreten,
R¹¹ OH oder eine hydrolysierbare Gruppe ist;
R¹² H oder eine monovalente organische Gruppe ist;
R¹³ H oder eine monovalente organische Gruppe ist;
R¹⁴ H oder Halogen ist;
X¹¹ eine Einfachbindung oder eine divalente organische Gruppe ist;
n1 in jeder (SiR¹¹ₙ₁R¹²₃₋ₙ₁)-Einheit eine ganze Zahl von 0-3 ist; und
t eine ganze Zahl von 2-10 ist;
-SiR^{a1}ₖ₁R^{b1}ₗ₁R^{c1}ₘ₁ (S3)
worin, jeweils unabhängig voneinander bei jedem Auftreten,
R^{a1} -Z¹-SiR²¹ₚ₁R²²_{q1}R²³ᵣ₁ ist,
Z¹ ein Sauerstoffatom oder eine divalente organische Gruppe ist;
R²¹ -Z^{1'}-SiR^{21'}_{p1'}R^{22'}_{q1'}R^{23'}_{r1'} ist,
Z^{1'} O oder eine divalente organische Gruppe ist;
R^{21'} -Z^{1"}-SiR^{22"}_{q1"}R^{23"}_{r1"} ist,
Z^{1"} O oder eine divalente organische Gruppe ist;
R^{22"} OH oder eine hydrolysierbare Gruppe ist;
R^{23"} H oder eine monovalente organische Gruppe ist;
q1" eine ganze Zahl von 0-3 ist;
r1" eine ganze Zahl von 0- 3 ist;
R^{22'} OH oder eine hydrolysierbare Gruppe ist;
R^{23'} H oder eine monovalente organische Gruppe ist;
p1' eine ganze Zahl von 0-3 ist;
q1' eine ganze Zahl von 0-3 ist;
r1' eine ganze Zahl von 0-3 ist;
R²² OH oder eine hydrolysierbare Gruppe ist;
R²³ H oder eine monovalente organische Gruppe ist;
p1 eine ganze Zahl von 0-3 ist;
q1 eine ganze Zahl von 0-3 ist;
r1 eine ganze Zahl von 0-3 ist;
R^{b1} OH oder eine hydrolysierbare Gruppe ist;
R^{c1} H oder eine monovalente organische Gruppe ist;
k1 eine ganze Zahl von 0-3 ist;
l1 eine ganze Zahl von 0-3 ist;
m1 eine ganze Zahl von 0-3 ist;
-CR^{d1}ₖ₂R^{e1}ₗ₂R^{f1}ₘ₂ (S4)
worin, jeweils unabhängig voneinander bei jedem Auftreten,
R^{d1} -Z²-CR³¹ₚ₂R³²_{q2}R³³ᵣ₂ ist,
Z² eine Einfachbindung, ein Sauerstoffatom oder eine divalente organische Gruppe ist;
R³¹ -Z^{2'}-CR^{32'}_{q2'}R^{33'}_{r2'} ist,
Z^{2'} eine Einfachbindung, O oder eine divalente organische Gruppe ist;
R^{32'} -Z³-SiR³⁴ₙ₂R³⁵₃₋ₙ₂ ist;
R^{33'} H, OH oder eine monovalente organische Gruppe ist;
q2' eine ganze Zahl von 0-3 ist;
r2' eine ganze Zahl von 0-3 ist;
R³² -Z³-SiR³⁴ₙ₂R³⁵₃₋ₙ₂ ist,
Z³ eine Einfachbindung, O oder eine divalente organische Gruppe ist;
R³⁴ OH oder eine hydrolysierbare Gruppe ist;
R³⁵ H oder eine monovalente organische Gruppe ist;
n2 eine ganze Zahl von 0-3 ist;
R³³ H, OH oder eine monovalente organische Gruppe ist;
p2 eine ganze Zahl von 0-3 ist;
q2 eine ganze Zahl von 0-3 ist;
r2 eine ganze Zahl von 0-3 ist;
R^{e1} eine, wie oben definierte, Gruppe R³² ist;
R^{f1} H, OH oder eine monovalente organische Gruppe ist;
k2 eine ganze Zahl von 0-3 ist;
l2 eine ganze Zahl von 0-3 ist; und
m2 eine ganze Zahl von 0-3 ist.

9. Artikel gemäß einem der Ansprüche 1-8, worin α, β und γ 1 sind.

10. Artikel gemäß einem der Ansprüche 1-9, worin X^{A} jeweils unabhängig voneinander eine trivalente organische Gruppe ist; eines von α und β 1 und das andere 2 ist; und γ 2 ist.

11. Artikel gemäß einem der Ansprüche 1-10, worin das Substrat ein Glassubstrat ist.

12. Verfahren zur Herstellung eines Artikels, umfassend ein Substrat und eine darauf gebildete Oberflächenbehandlungsschicht, die aus einem Oberflächenbehandlungsmittel gebildet ist, das mindestens eine fluorhaltige Silanverbindung der Formel (1) oder (2), wie in Anspruch 1 definiert, enthält, umfassend:
- gleichzeitiges Abscheiden von Si und Ta oder Si und Nb auf dem Substrat, um eine Zwischenschicht zu bilden, die ein Mischoxid aus Si und Ta oder aus Si und Nb enthält; und
- Ausbilden einer Oberflächenbehandlungsschicht direkt auf der Zwischenschicht.

13. Verwendung eines Oberflächenbehandlungsmittels, das mindestens eine fluorhaltige Silanverbindung der Formel (1) oder (2), wie in einem der Ansprüche 1 und 4-10 definiert, enthält, zur Herstellung des Artikels gemäß einem der Ansprüche 1-11.

## Revendications

1. Article, comprenant :
- un substrat ;
- une couche intermédiaire située sur le substrat et comprenant un oxyde composite qui (i) est un oxyde composite de Si et Ta ou de Si et Nb, et (ii) constitue une phase homogène ; et
- une couche de traitement de surface située directement sur la couche intermédiaire et formée à partir d'un agent de traitement de surface contenant au moins un composé de silane contenant du fluor de formule (1) ou (2) :
**R^{F1}_{α}-X^{A}-R^{Si}_{β}** (1)
**R^{Si}_{γ}-X^{A}-R^{F2}-X^{A}-R^{Si}_{γ}** (2)
dans lesquelles, chacun indépendamment, à chaque occurrence,
R^{F1} est Rf¹-R^{F}-O_{q}-, Rf¹ étant un alkyle en C₁₋₁₆ facultativement substitué par F, R^{F} étant un groupe fluoropolyéther divalent, et q valant 0 ou 1 ;
R^{F2} est -Rf²ₚ-R^{F}-O_{q}-, R^{F} et q étant tels que définis ci-dessus, Rf², chacun indépendamment, étant un alkylène en C₁₋₆ facultativement substitué par F, et p vaut 0 ou 1;
R^{Si} est un groupe monovalent contenant un atome Si auquel H, OH, un groupe hydrolysable, ou un groupe organique monovalent est lié ; et au moins un R^{Si} contenant un atome Si auquel OH ou un groupe hydrolysable est lié ;
X^{A} est une liaison simple ou un groupe organique di- à décavalent ;
**α** est un nombre entier de 1 à 9 ;
**β** est un nombre entier de 1 à 9 ; et
γ , chacun indépendamment, est un nombre entier de 1 à 9.

2. Article selon la revendication 1, dans lequel le rapport molaire entre Si et l'autre métal dans la couche intermédiaire à 0,1 à 10 nm de la surface la plus externe près de la couche de traitement de surface est de 10:90 à 99,9:0,1.

3. Article selon l'une quelconque de la revendication 1 ou de la revendication 2, dans lequel le rapport molaire entre Si et l'autre métal dans l'oxyde composite est de 10:90 à 99,9:0,1, de préférence de 13:87 à 93:7, et de manière préférée entre toutes de 45:55 à 75:25.

4. Article selon l'une quelconque des revendications 1 à 3, dans lequel Rf¹, chacun indépendamment, est un groupe C₁₋₁₆-perfluoroalkyle ; et Rf², chacun indépendamment, est C₁₋₆-perfluoroalkylène.

5. Article selon l'une quelconque des revendications 1 à 4, dans lequel R^{F}, chacun indépendamment, est un groupe répondant à la formule : -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- dans lequel R^{Fa}, chacun indépendamment, est H, F ou CI ; et a à f, chacun indépendamment, sont un nombre entier de 0 à 200, avec (a+b+c+d+e+f) ≥ 1, et l'ordre des motifs répétés entre parenthèses n'est pas limité.

6. Article selon la revendication 5, dans lequel R^{Fa} est F.

7. Article selon l'une quelconque des revendications 1 à 6, dans lequel R^{F}, chacun indépendamment, est un groupe de formule (f1), (f2) ou (f3) :
-(OC₃F₆)_{d}- (f1)
dans lequel d est un nombre entier de 1 à 200 ;
-(OC₄F₈)_{c}-(OC₃F₆)_{d}-(OC₂F₄)ₑ-(OCF₂)_{f}- (f2)
dans lequel c et d, chacun indépendamment, sont un nombre entier de 0 à 30, e et f, chacun indépendamment, sont un nombre entier de 1 à 200, et (c+d+e+f) est un nombre entier de 10 à 200 ; et l'ordre des motifs répétés entre parenthèses n'est pas limité ;
-(R⁶-R⁷)_{g}- (f3)
dans lequel R⁶ est OCF₂ ou OC₂F₄ ; R⁷ est OC₂F₄, OC₃F₆, OC₄F₈, OC₅F₁₀, ou OC₆F₁₂, ou est une combinaison de deux ou trois des groupes ; et g est un nombre entier de 2 à 100.

8. Article selon l'une quelconque des revendications 1 à 7, dans lequel R^{Si} est un groupe de formule (S1), (S2), (S3) ou (S4) : 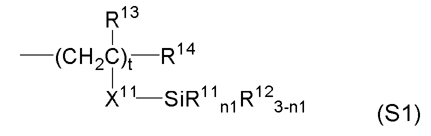
-SiR¹¹ₙ₁R¹²₃₋ₙ₁ (S2)
dans lequel, chacun indépendamment, à chaque occurrence,
R¹¹ est OH ou un groupe hydrolysable ;
R¹² est H ou un groupe organique monovalent ;
R¹³ est H ou un groupe organique monovalent ;
R¹⁴ est H ou halogène ;
X¹¹ est une liaison simple ou un groupe organique divalent ;
n1 est un nombre entier de 0 à 3 dans chaque motif (SiR¹¹ₙ₁R¹²₃₋ₙ₁) ; et
t est un nombre entier de 2 à 10 ;
**-SiR^{a1}ₖ₁R^{b1}ₗ₁R^{c1}ₘ₁** (S3)
dans lequel, chacun indépendamment, à chaque occurrence,
R^{a1} est -Z¹-SiR²¹ₚ₁R²²_{q1}R²³ᵣ₁,
Z¹ est un atome d'oxygène ou un groupe organique divalent ;
R²¹ est - Z^{1'}- SiR^{21'}_{p1'} R^{22'}_{q1'}R^{23'}_{r1'},
Z¹' est O ou un groupe organique divalent ;
R²¹' est -Z¹"-SiR²²"_{q1"}R²³"_{r1"},
Z¹" est O ou un groupe organique divalent ;
R²²" est OH ou un groupe hydrolysable ;
R²³" est H ou un groupe organique monovalent ;
q1" est un nombre entier de 0 à 3 ;
r1" est un nombre entier de 0 à 3 ;
R²²' est OH ou un groupe hydrolysable ;
R²³' est H ou un groupe organique monovalent ;
p1' est un nombre entier de 0 à 3 ;
q1' est un nombre entier de 0 à 3 ;
r1' est un nombre entier de 0 à 3 ;
R²² est OH ou un groupe hydrolysable ;
R²³ est H ou un groupe organique monovalent ;
p1 est un nombre entier de 0 à 3 ;
q1 est un nombre entier de 0 à 3 ;
r1 est un nombre entier de 0 à 3 ;
R^{b1} est OH ou un groupe hydrolysable ;
R^{c1} est H ou un groupe organique monovalent ;
k1 est un nombre entier de 0 à 3 ;
11 est un nombre entier de 0 à 3 ;
m1 est un nombre entier de 0 à 3 ;
**-CR^{d1}ₖ₂R^{e1}ₗ₂R^{f1}ₘ₂** (S4)
dans lequel, chacun indépendamment, à chaque occurrence,
R^{d1} est -Z²-CR³¹ₚ₂R³²_{q2}R³³ᵣ₂,
Z² est une liaison simple, un atome d'oxygène ou un groupe organique divalent ;
R³¹ est -Z²'-CR³²'_{q2'}R³³'_{r2'},
Z²' est une liaison simple, O ou un groupe organique divalent ;
R³²' est -Z³-SiR³⁴ₙ₂R³⁵₃₋ₙ₂;
R³³' est H, OH ou un groupe organique monovalent ;
q2' est un nombre entier de 0 à 3 ;
r2' est un nombre entier de 0 à 3 ;
R³² est -Z³-SiR³⁴ₙ₂R³⁵₃₋ₙ₂,
Z³ est une liaison simple, O ou un groupe organique divalent ;
R³⁴ est OH ou un groupe hydrolysable ;
R³⁵ est H ou un groupe organique monovalent ;
n2 est un nombre entier de 0 à 3 ;
R³³ est H, OH, ou un groupe organique monovalent ;
p2 est un nombre entier de 0 à 3 ;
q2 est un nombre entier de 0 à 3 ;
r2 est un nombre entier de 0 à 3 ;
R^{e1} est un groupe R³² tel que défini ci-dessus ;
R^{f1} est H, OH ou un groupe organique monovalent ;
k2 est un nombre entier de 0 à 3 ;
12 est un nombre entier de 0 à 3 ; et
m2 est un nombre entier de 0 à 3.

9. Article selon l'une quelconque des revendications 1 à 8, dans lequel **α, β** et **γ** valent 1.

10. Article selon l'une quelconque des revendications 1 à 9, dans lequel X^{A}, chacun indépendamment, est un groupe organique trivalent ; un parmi **α** et **β** vaut 1 et l'autre vaut 2 ; et γ vaut 2.

11. Article selon l'une quelconque des revendications 1 à 10, dans lequel le substrat est un substrat en verre.

12. Procédé de production d'un article comprenant un substrat et, formée sur celui-ci, une couche de traitement de surface formée à partir d'un agent de traitement de surface contenant au moins un composé de silane contenant du fluor de formule (1) ou (2) tel que défini en revendication 1 ; comprenant :
- le fait de déposer simultanément du Si et du Ta ou du Si et du Nb sur le substrat pour former une couche intermédiaire contenant un oxyde composite de Si et Ta ou de Si et Nb ; et
- le fait de former une couche de traitement de surface directement sur la couche intermédiaire.

13. Utilisation d'un agent de traitement de surface contenant au moins un composé de silane contenant du fluor de formule (1) ou (2) tel que défini dans l'une quelconque des revendications 1 et 4 à 10 pour produire l'article de l'une quelconque des revendications 1 à 11.
